# EUROPEAN PATENT SPECIFICATION

(11) **EP 2 884 408 B1**
(45) Date of publication and mention of the grant of the patent: **30.03.2022**
(21) Application number: 14178655.8
(22) Date of filing: 25.07.2014
(51) Int. Cl.: G06F 16/16

(54) **Content management systems for content items and methods of operating content management systems**
Inhaltsverwaltungssysteme für Inhaltselemente und Verfahren zum Betrieb von Inhaltsverwaltungssystemen
Systèmes de gestion de contenu pour des articles de contenu et procédés de fonctionnement desdits systèmes

(30) Priority: 13.12.2013 GB 201322044
(43) Date of publication of application: 17.06.2015
(73) Proprietor: RedSky IT (Hemel) Limited, Hemel Hempstead, Hertfordshire HP2 4TZ (GB)
(72) Inventor: Saunders, Jason, Hertfordshire, Hertfordshire HP2 4TZ (GB); Aspinwall, Mike, Hertfordshire, Hertfordshire HP2 4TZ (GB)
(74) Representative: Faulkner, Thomas John

(56) References cited:
- WO-A1-2013/103493
- US-A1- 2009 319 603
- KAI-LI WANG ET AL: "Modeling Unit of Learning in Learning Management System and Learning Content Management System with User Preference", HYBRID INTELLIGENT SYSTEMS, 2009. HIS '09. FIFTH INTERNATIONAL CONFERENCE ON, IEEE, PISCATAWAY, NJ, USA, 12 August 2009 (2009-08-12), pages 221-225, XP031529883, ISBN: 978-0-7695-3745-0

## Description

The present invention relates to content management systems for content items and methods of operating content management systems.

Files within computing systems are typically stored on a hardware device in a hierarchical folder-based directory structure. The hierarchical structure is viewable by a user, who can navigate through the structure to view the stored files.

In some situations it is desirable to have a file in more than one location within the structure. Conventionally, this is done either by copying the file to each additional location or by creating a symbolic link across the multiple locations. A symbolic link is typically a file that exists independently of the original file, and contains a reference to the original file. This reference may be the name/physical location that points to the original file.

A drawback with copying the file to each desired location is the additional use of storage space on the device. A further drawback is that, where any changes made to one copy of the file need to be made to all copies, there is a need to monitor all occurrences of the file, to monitor changes made to any one of these occurrences and to mirror those changes across all occurrences. This consumes time and resources.

Creating a symbolic link across multiple locations has several drawbacks. It is a more complicated operation which might be unfamiliar to typical users of a device. Thus a user may either not create such a link or may create a link with an error. In either case the resulting data integrity may be compromised. A further drawback is that the creation of the symbolic link may inherently be prone to errors. This may especially be true when considering symbolic links applied to or across different operating systems. Also not all symbolic links are capable of linking across different storage volumes. If a target of the symbolic link, i.e. the original file, is renamed, moved or deleted then the symbolic link may cease to function. In other words, the symbolic link will be broken. A 'shortcut' file within Windows (RTM) is an example of one type of symbolic link.

It would be desirable to provide a content management system for content items which does not suffer from one or more of these drawbacks.

US 2009/0319603 describes a system of content management where one user is permitted to cause another user to record and subsequently view content. Thus one user may in effect "recommend" content to a "friend". As such content lists are generated. These recommendations will be visible to a friend in a user interface. However, there is no low level description of how the content or recommendations will be stored and structured nor how such storage is managed, in US 2009/0319603.

According to a first aspect of the present invention, there is provided a content management system as claimed in claim 1.

According to a second aspect of the present invention, there is a method of operating a content management system as claimed in claim 14.

The user interface for display might be an image file, for example an image of the user interface, or it might be a set of instructions enabling the generation of the user interface. Thus the user interface may be sent to a device as an image of the user interface to be displayed, or as a set of instructions which enable the generation of the user interface locally.

It is to be understood in the following that the identifier or identifiers associated with a folder record or folder could equally be termed the at least one first identifier associated with a folder record or folder. Similarly, the identifier or identifiers associated with a content item could equally be termed the at least one second identifier associated with a content item.

The at least one first identifier may be the same as the at least one second identifier, in whole or in part. In other words, where the at least one first identifier and the at least one second identifier each comprise a plurality of identifiers, at least some of these identifiers may be the same.

The linking between identifiers and content items, and between identifiers and folder records, facilitates the creation and interactive nature of the user interface. Thus a user of the user interface may easily and intuitively interact with content items, irrespective of their storage location in the store. Thus the physical storage of content items may be arranged in a manner chosen by an administrator or system operator most appropriate to the circumstances without impacting the usability of the system, from the perspective of a typical user.

The method may comprise the steps of receiving an instruction to create the at least one folder record, and creating the at least one folder record within the content management system in response to the received instruction.

The method may comprise the steps of receiving an instruction to create the at least one identifier and/or the set of identifiers, and creating the at least one identifier and/or the set of identifiers within the content management system in response to the received instruction.

It is to be understood that the instruction may be a user instruction, a programmatic instruction, or some combination thereof. Thus a folder record and/or an identifier and/or set of identifiers may be created in response to a user directly, or in response to a program on the computing device. This permits either or both of a manual and automatic operation, increasing the flexibility of the content management system.

It will be understood that any of the steps of creating the folder record, or creating the identifier or set of identifiers can be carried out before the step of receiving the first instruction or at any other stage. The content management system may comprise one or more existing folder records and/or identifiers and/or sets of identifiers. The creation of a folder record and/or an identifier and/or a set of identifiers may be the creation of a first such folder record or identifier or set of identifiers, or the creation of further folder records or identifiers or sets of identifiers.

Preferably the identifier comprises a first identifier portion and a second identifier portion. The identifier may comprise a name of a variable and a value of the variable. The first identifier portion may comprise the name of the variable. The second identifier portion may comprise the value of the variable. The identifier may be considered as a tag. In this way, the tag may comprise a name/value pair.

The method may comprise the step of storing at least one content item in the store on the computing device. The step of storing the at least one content item may include loading the at least one content item into the store and/or keeping the content item stored in the store. The content management system may comprise the at least one identifier or set of identifiers stored on the computing device. The store may be separate from the content management system. The store may be part of the content management system. The content management system may comprise the at least one content item stored in the store on the computing device.

The store may be separate from the computer. The store may be on the computer.

The method may comprise the step of outputting a signal from the content management system. The output signal may be for viewing by a user on a display. The output signal may comprise at least a portion of the user interface. In other words, the output signal may be output to a display device to enable a user to view and interact with the user interface of the content management system.

Preferably the content item is assigned to the folder within the user interface in dependence only on the identifier or identifiers associated with the content item and the identifier or identifiers associated with the folder. Preferably the content item is a file.

Preferably the identifier is modifiable. The identifier may be modifiable by a computer program. The identifier may be modifiable by a user. The content management system may be arranged, where the identifier associated with the content item is modified, to modify the user interface to show the content item within another and/or a different folder in dependence on the modified identifier.

Preferably the method comprises the step of assigning the content item to the folder where the identifier or identifiers associated with the content item comprise the identifier or identifiers associated with the folder.

Preferably the method comprises the step of creating within the content management system a unique folder record label for each folder record. The method may comprise the step of storing the folder record label as part of the folder record. The folder record label may be stored on the computing device. Such a unique folder record label allows the simple identification of the folder record within the content management system.

Preferably the method comprises the step of associating at least one of the set of identifiers with the folder record label so as to associate the at least one of the set of identifiers with the respective folder record.

Preferably the method comprises the step of creating within the content management system a unique content item label for each content item. The method may comprise the step of associating at least one of the set of identifiers with the content item label so as to associate the at least one of the set of identifiers with the respective content item. Such a unique content item label allows the simple identification of the content item within the content management system.

Preferably the content item label is stored separately from the content item itself. In other words, the creation of the content item label may not affect the actual content item itself, but is rather a label that is assigned to or linked with the content item.

The method may comprise the steps of receiving an instruction within the content management system to create a plurality of folder records, and creating a plurality of folder records. The method may comprise the step of creating a plurality of folders in the user interface corresponding to the plurality of folder records. The method may comprise the step of receiving an instruction within the content management system to arrange the plurality of folders in a specified folder arrangement. Preferably the folder arrangement is a hierarchical folder arrangement. In other words, the folder arrangement may comprise at least one folder which comprises at least one subfolder. The received instructions may be user instructions or they may be programmatic instructions, or a combination thereof.

Preferably the method comprises the step of receiving an instruction within the content management system to associate one or more of the set of identifiers with each of, or a subset of, the plurality of folder records. Preferably the method comprises the step of receiving an instruction within the content management system to associate a plurality of identifiers with at least one of the folder records. The method may comprise the step of receiving an instruction within the content management system to associate a plurality of identifiers with a plurality of the folder records. In other words, one or more identifiers may be associated with respective one or more folder records. Some folder records may be associated with the same identifier or identifiers as other folder records, whilst some folder records may be associated with a unique combination of identifiers.

Preferably the step of storing the at least one content item within the store on the computing device includes the steps of creating at least one directory within the store, the filepath of which directory is dependent on the content item label of the respective content item, and storing the respective content item in the respective directory. Preferably the at least one content item stored within the store on the computing device is stored in a directory the filepath of which is dependent on the content item label of the respective content item. In this way, the content items can be stored in the store in a defined manner. This method of storing the content items may facilitate the backing-up of the store comprising the content items.

The method may comprise the step of storing the content items in the store in a single location. This location may be within a single folder. As mentioned above, however, the content items may be stored in multiple directories within such a single folder. The method may comprise the step of storing the content items in the store on a single computing device. The content items may be stored in the store in a single location. The content items may be stored in the store on a single computing device. The method may comprise the step of storing the content items in the store on a plurality of computing devices or in a plurality of stores on a single computing device or on a plurality of computing devices.

Preferably the method comprises the step of receiving an instruction within the content management system to modify the identifier or identifiers associated with a content item. The instruction to modify the identifier or identifiers may be a user instruction or it may be a computer program originating instruction. The modification of the identifier or identifiers may be a modification of the first identifier portion and/or a modification of the second identifier portion. The modification of the identifier may be the removal of the association between the content item and the identifier. The modification of the identifier may be the additional association of a further identifier with the content item. The modification of the identifier may be the deletion of the identifier.

The modified identifier may be associated with different content items compared to the unmodified identifier. In this way, associations between identifiers and content items can be created and/or removed. The content management system may be arranged to delete the identifier.

Preferably the method comprises, where at least one identifier is modified, the step of modifying the user interface of the content management system to assign within the content management system the content item to which said at least one identifier is associated to a folder or folders in dependence on the modified identifier. Thus the folder to which the content item is assigned can be modified by modifying the identifier associated with the content item.

Such a dynamic modification of the user interface, showing a change in location of the content item between the folders of the user interface, does not necessitate modification of the content item itself or its actual location in the store on the computing device, but merely of the identifier or identifiers associated with the content item. Such a dynamic modification of the user interface could also be achieved by modifying the identifier or identifiers associated with one or more folders as well as or instead of modifying the identifier or identifiers associated with the content item.

The method may comprise the steps of receiving an instruction within the content management system to associate a first identifier with a first folder record and a second folder record, and associating the first identifier with the first and second folder records. A single content item associated with the first identifier may therefore appear in multiple locations (here, in both first and second folders within the user interface corresponding to the first and second folder records) without a need for multiple copies of the content item to be stored on the computing device. This reduces the physical storage requirements needed for the computing device.

Preferably the method comprises the steps of receiving an instruction to associate a plurality of identifiers with the content item, and associating the plurality of identifiers with the content item.

Where the content item has associated therewith a plurality of identifiers, at least a subset of the plurality of identifiers being associated with a third folder of the user interface and at least another subset of the plurality of identifiers being associated with a fourth folder of the user interface, where the fourth folder is a subfolder of the third folder, the method may comprise the step of assigning within the content management system the content item to the fourth folder and preventing the content item being assigned to the third folder. In other words, the method may comprise the step of modifying the user interface to prevent the appearance in a parent folder of a content item which appears in a subfolder of that parent folder.

The method may comprise the step of analysing within the content management system one or more identifiers associated with a subfolder of a parent folder and assigning a content item associated with the same identifier or identifiers as the subfolder to the subfolder whilst preventing the content item from being assigned to the parent folder.

Of course, if desired, the user interface may show the content item in more than one folder, which can include a parent folder and a subfolder.

The method may comprise the step of receiving an instruction within the content management system to create a new content item to assign to an existing folder in the user interface, and in response to the received instruction the method may comprise the following additional steps:
creating a new content item and storing the created content item in the store;
identifying the folder of the user interface to which the created content item is to be assigned;
identifying the identifier or identifiers associated with the identified folder; and
associating the identified identifier or identifiers with the created content item such that the created content item is caused to appear in the identified folder in the user interface.

In this way the newly created content item, such as a new file, will inherit the identifiers associated with the folder to which the content item is assigned within the user interface.

Preferably the method comprises the step of creating within the content management system a unique content item label for the created content item. The method may comprise the step of associating the identified identifier or identifiers with the unique content item label for the created content item so as to associate the identified identifier or identifiers with the created content item.

Preferably the method comprises the step of storing the created content item in a directory within the store, the filepath of which directory is dependent on the content item label of the created content item.

The method may comprise the step of receiving an instruction within the content management system to assign an additional content item to an existing folder in the user interface, and in response to the received instruction the method may comprise the following additional steps:
adding an additional content item and storing the additional content item in the store;
identifying the folder of the user interface to which the additional content item is to be assigned;
identifying the identifier or identifiers associated with the identified folder; and
associating the identified identifier or identifiers with the additional content item such that the additional content item is caused to appear in the identified folder in the user interface.

In this way the additional content item, such as an additional file, will inherit the identifiers associated with the folder to which the content item is assigned within the user interface.

Preferably the method comprises the step of creating within the content management system a unique content item label for the additional content item. The method may comprise the step of associating the identified identifier or identifiers with the unique content item label for the additional content item so as to associate the identified identifier or identifiers with the additional content item.

Preferably the method comprises the step of storing the additional content item in a directory within the store, the filepath of which directory is dependent on the content item label of the additional content item.

The method may comprise the step of receiving an instruction within the content management system to copy a content item within an existing folder in the user interface to another existing folder within the user interface, and in response to the received instruction the method may comprise the following additional steps:
identifying the folder of the user interface to which the content item is to be copied;
identifying the identifier or identifiers associated with the identified folder; and
associating the identified identifier or identifiers with the content item such that the content item is caused to additionally appear in the identified folder in the user interface.

In this way the content item will inherit the identifiers associated with the folder within the user interface to which the content item is copied. Here, the notion of copying indicates that the content item is additionally shown in the folder to which it is 'copied' as well as in the original folder. Only a single instance of the content item may exist in the store, this instance of the content item appearing in both folders.

The method may comprise the step of comparing the identified identifier or identifiers with the identifier or identifiers already associated with the content item and avoiding the duplication of identifiers associated with the content item.

Preferably the method comprises the step of associating the identified identifier or identifiers with the unique content item label for the content item so as to additionally associate the identified identifier or identifiers with the content item.

The method may comprise the step of receiving an instruction within the content management system to create a subfolder within a folder of the user interface, and in response to the received instruction the method may comprise the following additional steps:
creating a new folder record within the content management system corresponding to the subfolder;
associating at least one identifier with the new folder record;
identifying the folder of the user interface within which the subfolder is created;
identifying the identifier or identifiers associated with the identified folder; and
associating the identified identifier or identifiers with the new folder record.

The subfolder may therefore have associated therewith at least one identifier which may be specified in the received instruction, together with all the identifiers of the parent folder, i.e. it may inherit the identifiers of the parent folder. The inherited identifiers may be associated with the subfolder at runtime, rather than by being copied to the folder record for the subfolder. In other words, at runtime, a list of the identifier(s) of the parent folder together with the identifier(s) of the subfolder may be compiled - this list comprising the identifiers associated with the subfolder.

When the parent folder is itself a subfolder of another folder, the list of identifiers associated with a particular subfolder may be compiled from the identifiers of each of the folders higher up the hierarchy than that subfolder.

The method may comprise the step of receiving within the content management system an instruction to move a content item in the user interface from a fifth folder to a sixth folder, and in response to the received instruction the method may comprise the following additional steps:
identifying the identifier or identifiers associated with the fifth folder;
identifying the identifier or identifiers associated with the sixth folder;
removing the association between the identified identifier or identifiers associated with the fifth folder and the content item; and
associating the identified identifier or identifiers associated with the sixth folder with the content item such that the content item is caused to appear in the sixth folder in the user interface in place of appearing in the fifth folder.

The method may comprise the step of modifying the user interface. The method may comprise the step of modifying the user interface directly. The user interface may be modifiable. The user interface may be directly modifiable. In other words, the user interface may be modifiable by modifying the folders of the user interface, or the corresponding folder records. This is in addition to the user interface being modifiable by changing the identifier or identifiers associated with one or more content items. The method may comprise the step of removing a subfolder from the user interface and modifying the user interface to show content items previously contained in that subfolder in the parent folder of that subfolder.

The content management system may be arranged such that on removing a folder record corresponding to a subfolder from the user interface, the user interface is modified such that content items previously appearing in that subfolder appear in the parent folder of that subfolder.

The method may comprise the step of verifying within the content management system that a received instruction satisfies at least one permission criterion, and of performing the actions requested as part of the received instruction only if the received instruction does satisfy the permission criterion. The permission criterion may relate to the origin of the received instruction - i.e. a user or group of users, or a computer program - and/or to the action requested. The permission criterion may relate to one or more particular identifiers.

In other words, the method may restrict certain actions to certain users/programs, and/or the method may restrict certain actions independent of the user/program requesting the action. For example, specified folder records and/or identifiers may only be modifiable by an administrator, whilst other folder records and/or identifiers may be modifiable by any user. The method may comprise the step of ensuring that at least one identifier is associated with a content item and/or a folder record.

The use of at least one permission criterion may increase the security of the system, and its reliability.

The method may comprise the step of receiving as part of the received instruction a permission value. The permission value may be dependent on the origin of the received instruction. The method may comprise the step of storing within the content management system a permission record. The permission record may be a predetermined permission record. The method may comprise the step of comparing the permission value to the permission record. The received instruction may satisfy the permission criterion if the permission value matches or exceeds a value of the permission record. The received instruction may satisfy the permission criterion if the permission value is within a predefined group of values within the permission record. It will be appreciated that other ways of storing and comparing permission values and records are possible, as would be known to the skilled person.

It will be appreciated that the content management system is not implementation specific but can be used on different hardware/software configurations.

Preferably the content management system is arranged to carry out any method step, or any combination of method steps, as given above, where possible.

The content management system may be arranged under the control of a computer program to carry out any method step, or any combination of method steps, as given above. The computer program may be a computer software program product.

According to another aspect of the present invention, there is provided a computing device comprising the content management system as defined above.

According to another aspect of the present invention, there is provided a computer program comprising code portions which when loaded and run on a computer cause the computer to carry out any method step, or any combination of method steps, as defined above, and/or to configure a content management system as defined above.

It is to be understood in the above that any reference to an instruction may be either a user instruction or a programmatic instruction. Any instruction may be a combination of a user instruction and a programmatic instruction. Any instruction called a user instruction could also be a programmatic instruction, where possible, and vice versa.

Embodiments of the present invention will now be described, by way of example only, with reference to the accompanying drawings, in which:
Figure 1 shows a schematic of a computing device comprising a content management system;
Figure 2 shows a schematic of a store on a computing device;
Figure 3 shows a flowchart illustrating steps for creating a folder in a content management system;
Figures 4a and 4b show a schematic user interface before and after the creation of a new folder;
Figure 5 shows a flowchart illustrating steps to create a subfolder in a content management system;
Figure 6a and 6b show a schematic user interface before and after the creation of a new subfolder;
Figure 7 shows a flowchart illustrating steps to create a new file in a folder in a content management system;
Figures 8a and 8b show a schematic user interface before and after the creation of a new file in a folder;
Figure 9 shows a flowchart illustrating steps to move files between folders in a content management system;
Figures 10a and 10c show a schematic user interface before and after the moving of a file between folders; Figure 10b shows a schematic user interface showing the movement of a file between folders in a schematic manner;
Figure 11 shows a flowchart illustrating steps to add a file in a content management system;
Figure 12 shows a flowchart illustrating steps to copy a file from a template file in a content management system;
Figure 13 shows a flowchart illustrating steps to remove identifiers from a file in a content management system; and
Figure 14 shows a flowchart illustrating steps to remove a subfolder in a content management system.

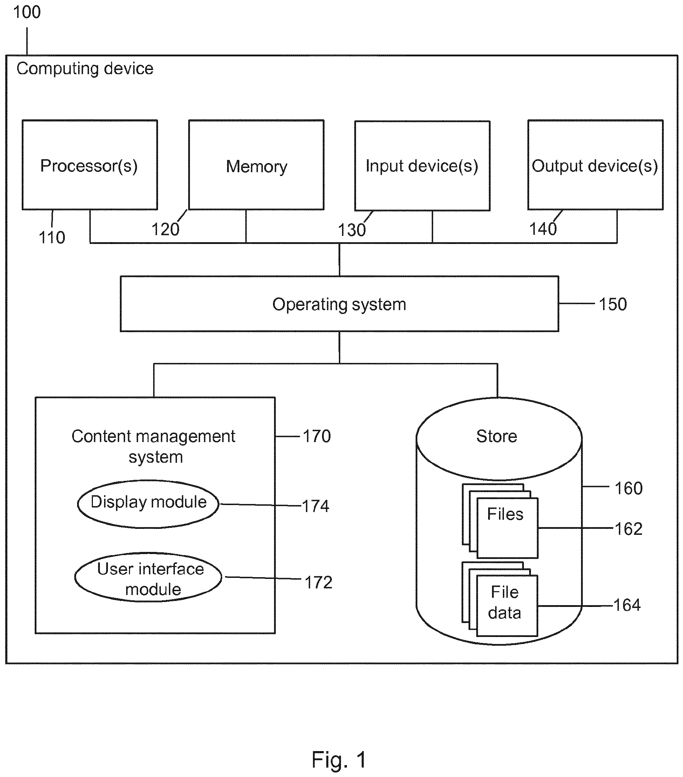

Referring to Figure 1, a computing device 100 comprises one or more processors 110, memory 120, one or more input devices 130 and one or more output devices 140. The computing device further comprises an operating system 150 which runs on the computing device 100. The computing device 100 further comprises a store 160 for storing files/data on the computing device, and a content management system 170.

The store 160 has stored therein a plurality of content items such as files 162 stored in the store 160.

The content management system 170 provides a user interface for the files 162 stored in the store 160 on the computing device 100. Referring again to Figure 1, in the schematic computing device 100 shown, the content management system 170 comprises a user interface module 172 for creating a user interface for allowing a user of the computing device 100/content management system 170 to view and interact with files 162 stored in the store 160, and a display module 174 for displaying the user interface, for example, on one or more of the output devices 140 for viewing by a user.

The content management system 170 provides a way for a user to interact with files 162 independent of the physical storage location of the files in a store 160, and irrespective of the nature of the files themselves. The content management system 170 provides a user interface with which a user can interact, and which is arranged in a (user-)definable manner. Thus the files 162 (in terms of what appears in the user interface) can be arranged (and rearranged) as desired by a user without needing knowledge of, and without affecting, how the files are actually stored in the store 160. The content management system 170 does this using identifiers which are associated with the files and folders. In this way, a user may interact with files in the same way as a standard system, whilst the underlying structure and operation of the content management system 170 is different from the standard system. As will be described below, these differences enhance the reliability of the content management system 170 and minimise physical storage requirements.

In the present embodiment, the content management system 170 is a web-based content management system with which users can interact over a network. Thus it is envisaged that the content management system 170 and the store 160 will be remote from a user (i.e. remote from a client device, such as on a server). The user interface is generated remote from a client device (i.e. on a server) and is sent to a client device for display. In alternative configurations, the content management system 170 and/or the database tables described below, and/or the store can be located on more than one server, or on a client device, or some combination of one or more servers and a client device. It is also possible for the user interface to be generated on a client device. In other words, the present techniques can utilise 'cloud-based' computing in addition or as an alternative to a single machine or a client-server system.

The files 162 shown schematically in the store 160 in Figure 1 can more generally be considered as content items and may be content items of any type that can be stored in a store on a computing device.

Each file 162 is assigned a unique content label by the content management system 170, and is stored in the store 160 in a directory created based on the content label. The content label is, in this implementation, a nine digit number, as will be discussed below. Other formats of content label are possible. On the creation or addition of content items 162 to the store 160, new content labels are created and assigned to those content items 162. Successive content labels can simply be successive nine digit numbers. The directory in the store 160 for each content item 162 is split in such a way as to allow it to be backed up to file systems that might have prohibitive limitations on directory entries (for example FAT32 is limited to 65,534 files in a folder). To avoid such limitations on directory entries, a content label of, for example, 256 would be padded with zeros to form a nine digit string which is then split on three digit boundaries to form a directory path, i.e. 000/000/256. The file 162 is then stored in that folder. Each folder contains a maximum of 999 entries. Padding the content labels with zeros to form a nine digit string allows up to 1 billion files to be handled. Obviously if greater than this number of files need to be handled within the content management system 170, then the path could simply be extended to, for example, 12 digits or greater. The content label may be a BIGINT SQL server data type which has a maximum value of 9,223,372,036,854,775,807, allowing for future expansion of the content management system.

A further option is to have a separate folder within the directory path 000/000/256 for each revision of the file, i.e. 000/000/256/0 for revision 0 and 000/000/256/1 for revision 1. Again, this facilitates the ease of backing up the files.

As mentioned, the content management system 170 enables the interaction of a user with files 162 stored in the store 160. This interaction is independent of the physical storage location of the files 162 in the store 160. This allows simple interaction with the files 162.

The interaction of a user with files 162 facilitated by the content management system 170 is enabled by the use of identifiers associated with the files 162. The files 162 have one or more identifiers associated therewith, which identifier or identifiers are used by the content management system 170 to cause the files 162 to appear in a desired location within the user interface of the content management system 170.

The content management system 170 comprises folder records. The folder records also have associated therewith one or more identifiers.

In creating the user interface, the content management system 170 creates one or more folders corresponding to the one or more folder records. Each folder is therefore associated with the identifier or identifiers associated with the corresponding folder record. The folders in the user interface may be created in any desired structure such as a hierarchical structure which will be familiar to users of desktop operating systems such as, for example, Windows (RTM). In this way, the content management system 170 retains, from a user perspective, the behaviour expected from a conventional directory.

In one implementation, the content management system 170 is arranged to show in the user interface in a particular folder, files 162 which are associated with the same identifiers as that folder. In this way the identifiers serve as a link between the folders in the user interface of the content management system 170 and the files 162.

The content management system 170 allows the linking of content items to identifiers and the linking of folder records to identifiers. The user interface is for display such that a user can view and/or interact with the content items 162. The folder(s) of the user interface and the content items 162 for display within the folder(s) are arranged in dependence on the linking of the identifiers with the content items 162 and folder records. The structure of the user interface is independent of the structure of the store 160 in which content items 162 are stored. This enables the modification of the user interface (i.e. the location of the content items 162 within the folder(s)) without necessitating the modification of the physical store 160.

Whilst the content management system 170 can be implemented in various ways on different platforms, the description below will focus on an implementation using SQL database tables. In this implementation, the files 162 are stored in the store 160 and the identifiers are stored in a SQL server database. Note that it is not necessary to place the identifiers directly inside the files 162. The identifiers are stored solely within the database.

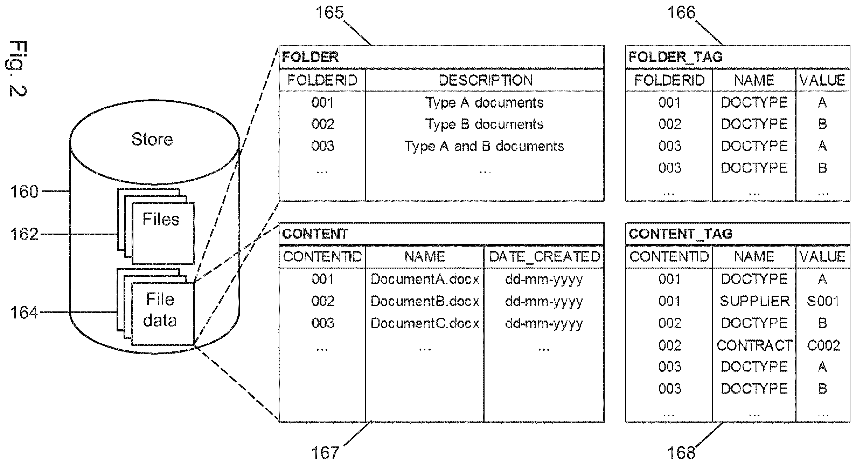

Referring to Figure 2, the store 160 comprises file data 164. In this implementation the file data 164 comprises SQL database tables 165, 166, 167, 168. The content of the SQL database tables 165, 166, 167, 168 will be described further below with reference to examples.

The database tables relate both to the content items stored on the computing device 100, i.e. the files 162 stored in the store 160, and to the folders within the user interface of the content management system 170.

The database tables comprise a FOLDER database table 165 and a FOLDER_TAG database table 166.

The folder record (as introduced above, and will be further explained below) comprises the FOLDER database table 165. The FOLDER database table 165 comprises fields relating to the unique folder label assigned to each folder within the content management system 170 (termed "FOLDERID" in Figure 2) and a field relating to a description associated with the unique folder label (termed "DESCRIPTION"). In this implementation the unique folder label is simply a series of numbers. It is also possible to use a longer numeric string to represent the folder label or an alphanumeric string which can also be of a differing length. This is somewhat dependent on the number of distinct folder records desired to be stored within the content management system 170. In Figure 2, the FOLDERID is represented by a three digit number. This representation will be referred to below for simplicity.

The entries in the DESCRIPTION field in the FOLDER database table 165 relate to a description of the contents of the respective folders corresponding to the folder records.

Each row in the FOLDER database table 165 (comprising a folder label and corresponding description) may be considered as a distinct folder record.

Each folder in the content management system 170 has one or more identifiers associated with it. The identifiers associated with each of the folder records within the FOLDER database table 165 are stored in a folder identifier database table 166 (entitled "FOLDER_TAG" in Figure 2). In the present implementation the identifiers comprise two portions, one portion of which is called the "NAME" of the identifier and the other portion of which is called the "VALUE" of the identifier. The identifier thus comprising a NAME/VALUE pair of constituent portions is termed a tag. Each row of the FOLDER_TAG database table 166 comprises values relating to the unique folder label assigned to each folder (the "FOLDERID") and a NAME/VALUE pair (i.e. a tag). A unique folder label may appear in more than one row in the FOLDER_TAG database table 166, and against each occurrence of the unique folder label there may be a different NAME/VALUE pair in the corresponding row of the database table. In this way a tag (i.e. a NAME/VALUE pair) can be associated with a unique folder label and more than one tag may be associated with a single unique folder label.

The folder labels in the FOLDER database table 165 and the FOLDER TAG database table 166 provide a link between the tags associated with the folder label and the folders created in the user interface based on the folder record in the FOLDER database table 165.

The database tables further comprise a CONTENT database table 167 and a CONTENT_TAG database table 168. The CONTENT database table 167 comprises fields relating to the unique content item label assigned to each content item within the content management system 170 (termed "CONTENTID"), a field relating to a name given to the respective content item (termed "NAME") and a field relating to a date of creation of the respective content item (termed "DATE_CREATED"). In this implementation the unique content item label comprises nine numeric characters but similarly to the unique folder label mentioned above the content item label could be of a differing length and/or an alphanumeric string. The length and/or format of the content item label is somewhat dependent on the number of distinct content items desired to be stored within the content management system 170. In Figure 2, the CONTENTID is represented by a three digit number. This representation will be referred to below for simplicity.

As shown in Figure 2 the DATE_CREATED column in the CONTENT database table 167 contains a date on which the respective content item was created. Further information relating to a particular content item could be stored in the CONTENT database table 167 (such as time of creation, time/date of modification, the name of the user who created/modified the content item, and file size) and can be stored either additional to or instead of the DATE CREATED information. Thus the DATE CREATED field is representative of various types of information that can be stored in the CONTENT database table 167 in respect of a particular content item.

Each row in the CONTENT database table 167 corresponds to a distinct content item.

Each content item has one or more identifiers associated with it. The identifiers associated with each of the content items, as listed in the CONTENT database table 167 are stored in a content item identifier database table 168 (entitled "CONTENT_TAG" in Figure 2). As with the FOLDER_TAG database table 166 described above, the CONTENT_TAG database table 168 comprises both NAME and VALUE identifier portions which together make up a NAME/VALUE pair, again termed a tag. Each row of the CONTENT_TAG database table 168 comprises values relating to the unique content item label assigned to each content item (the "CONTENTID") and a NAME/VALUE pair (i.e. a tag). A unique content item label may appear in more than one row in the CONTENT_TAG database table 168, and against each occurrence of the unique content item label there may be a different NAME/VALUE pair in the corresponding row of the database table. In this way a tag (i.e. a NAME/VALUE pair) can be associated with a unique content item label and more than one tag may be associated with a single unique content item label.

The content item labels used in respect of the content items within the content management system 170 in the CONTENT database table 167 and the CONTENT_TAG database table 168 provide a link between the tags associated with the content item label and the content items based on the record in the CONTENT database table 167. This use of the SQL database tables thus provides one way of associating tags with different content items within the user interface of the content management system 170.

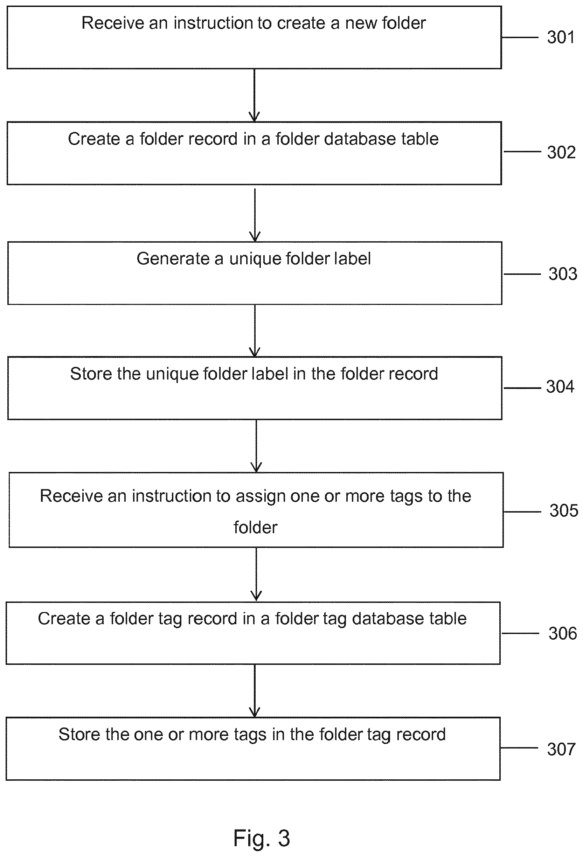

Turning now to Figures 3-15, various operations of the content management system 170 will be described.

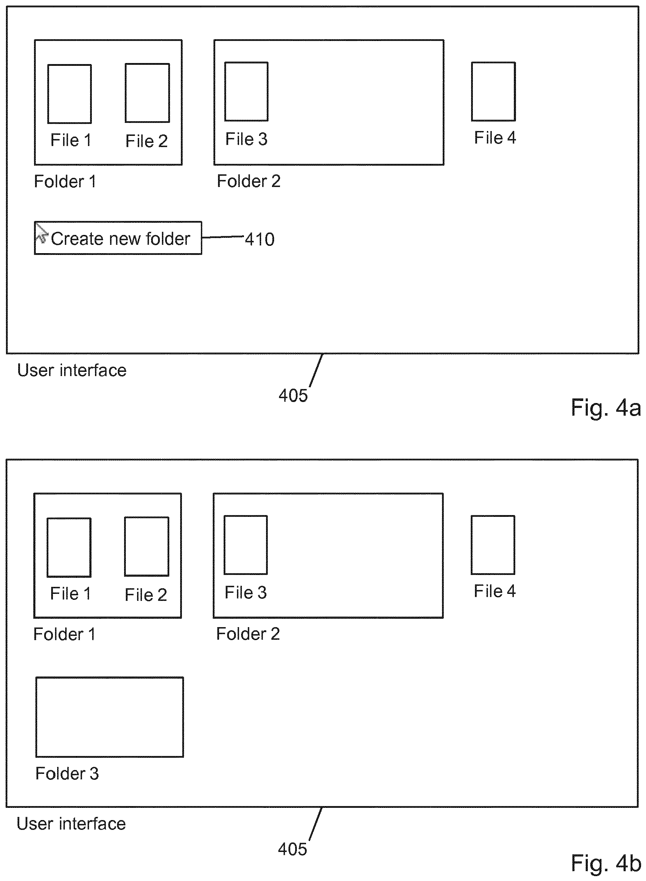

One operation of the content management system 170 is the creation of a folder. Figure 3 shows a flowchart illustrating steps in this operation and Figures 4a and 4b respectively show a schematic user interface before and after the creation of a new folder. Referring to Figure 3, in step 301 an instruction is received to create a new folder. The instruction can be a user instruction or a programmatic instruction or some combination of a user and a programmatic instruction. This is illustrated in Figure 4a as a command 410 accessible to a user by, for example, a right-click on a mouse (or some other input device 130) within the user interface 405. The command may be provided in a drop-down menu, or in any other convenient manner. In this way a user may pass an instruction to the content management system 170 to create one or more folders corresponding to a desired folder structure of the user interface 405. It is also possible for one or more folders to be created automatically in response to a programmatic instruction. The ability to perform a function (here to create folders) in response to either or both of a user instruction and a programmatic instruction means that the content management system 170 retains flexibility of operation. For instance, a computer program may instruct the content management system 170 to create a number of folders in a particular hierarchical configuration which may be a starting point for the folder structure of the user interface 405. A user may then instruct the content management system 170 to create further folders as desired to better suit the folder structure for a particular use.

In step 302 the content management system 170 creates a folder record in a folder database table, i.e. the FOLDER database table 165 shown in Figure 2. The folder record is a row in the FOLDER database table 165 that can be used to store details concerning the folder.

The content management system 170 generates a unique folder label for the new folder (in step 303) and stores the unique folder label in the created folder record (step 304) - it is written into the FOLDERID column in the FOLDER database table 165.

When the new folder record has been created, the user interface will show a new folder corresponding to the new folder record. This is shown schematically in Figure 4b, where Folder 3 appears as a new folder.

The instruction received within the content management system 170 in step 301 may also comprise a description to be assigned to the new folder, which description may be entered in the DESCRIPTION column in the FOLDER database table 165. The content of the DESCRIPTION column may be used as a title for the folder in the user interface 405 or alternatively a separate column in the FOLDER database table 165 may be provided within which a title for the folder can be stored. It is possible for such title information to also be received by the content management system 170 as part of the instruction received in step 301. Alternatively a separate instruction may be received by the content management system 170, which separate instruction comprises the description and/or title to be stored in the FOLDER database table 165 against the unique folder label generated by the content management system 170 in step 303.

Similarly, descriptions and/or titles can be received, and instructions may be received separately or together, in respect of other processes of the content management system 170. This will not be explicitly described in respect of each process below for brevity.

In the present implementation the FOLDER database table 165, the FOLDER_TAG database table 166, the CONTENT database table 167 and the CONTENT_TAG database table 168 are pre-existing in the content management system 170. In an alternative implementation one or more of the database tables 165, 166, 167, 168 may be created in response to a user and/or a programmatic instruction and/or may be created as a component step in creating a folder (or subfolder) and/or creating/adding a content item.

In step 305 an instruction to assign one or more tags (i.e. identifiers) to the folder is received within the content management system 170. The instruction received in step 305 comprises details of the tags to be assigned to the folder. The details of the tags comprise the NAME/VALUE pair. In step 306 a folder tag record is created in the FOLDER_TAG database table 166. In step 307 the tags received as part of the instruction in step 305 are stored in the folder tag record in the FOLDER_TAG database table 166.

The instruction received in step 305 could equally be received together with or as part of the instruction received in step 301.

As an example, consider that an instruction is received to create a new folder in response to which a folder label of "003" is generated. This folder label is stored in a new row in the FOLDER database table 165. If two folders already exist with folder labels "001" and "002" then the new folder label "003" is stored in the third row of the FOLDER database table 165 (see Figure 2). Also received as part of the instruction, or together with the instruction to create a new folder, is text to be stored as a description against the folder label for that new folder. In this example the text "Type A and B documents" is received to be stored as the description, and this text is stored in the DESCRIPTION column in the FOLDER database table 165 in the same row as the folder label "003" (stored in the FOLDERID column).

Continuing with the example, an instruction is received within the content management system 170 to assign two particular tags to the new folder. The tags specified in the instruction comprise NAME/VALUE pairs. The name of each tag is "DOCTYPE" and the value within one tag is "A" and the value within the other tag is "B". Thus these tags relate to a common property of a content item (i.e. their DOCTYPE) with different values being assigned to that property. The folder tag record is then created within the FOLDER_TAGdatabase table 166. In this example, as two tags have been specified to be assigned against the folder corresponding to the folder label "003", that folder label is written into the FOLDERID column in the FOLDER TAG database table 166 in two successive rows. The NAME and VALUE of the tags are then written in the corresponding columns of the respective rows in the FOLDER_TAGdatabase table 166.

SQL code runs in real time in the content management system 170 to compare tags associated with files to tags associated with folders. On the basis of this comparison the user interface is dynamically modified such that, on modification of the tags associated with a folder, existing files 162 associated with tags matching those of the folder are caused to appear in that folder in the user interface.

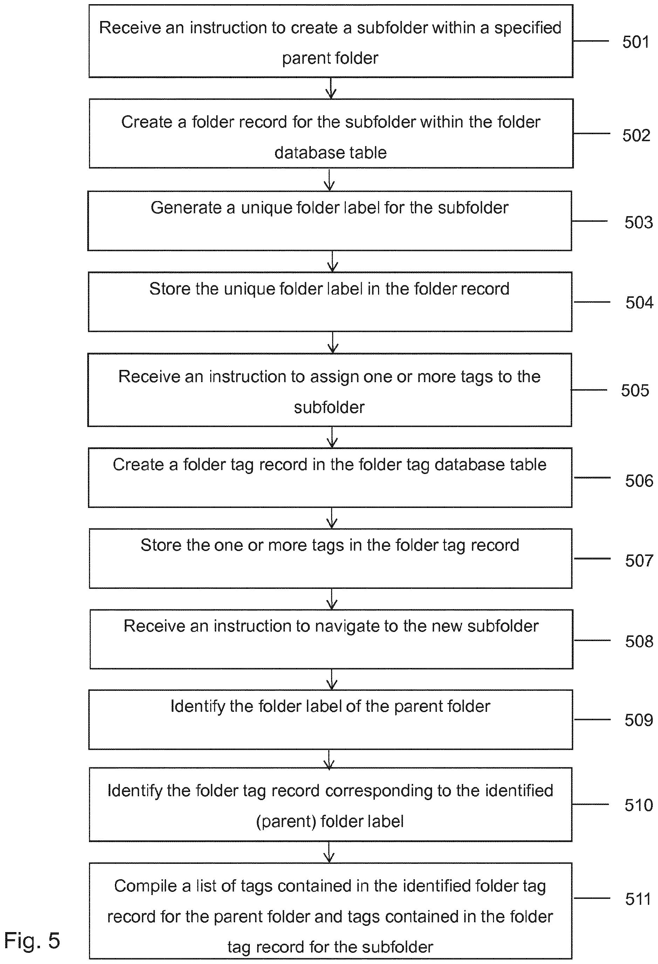

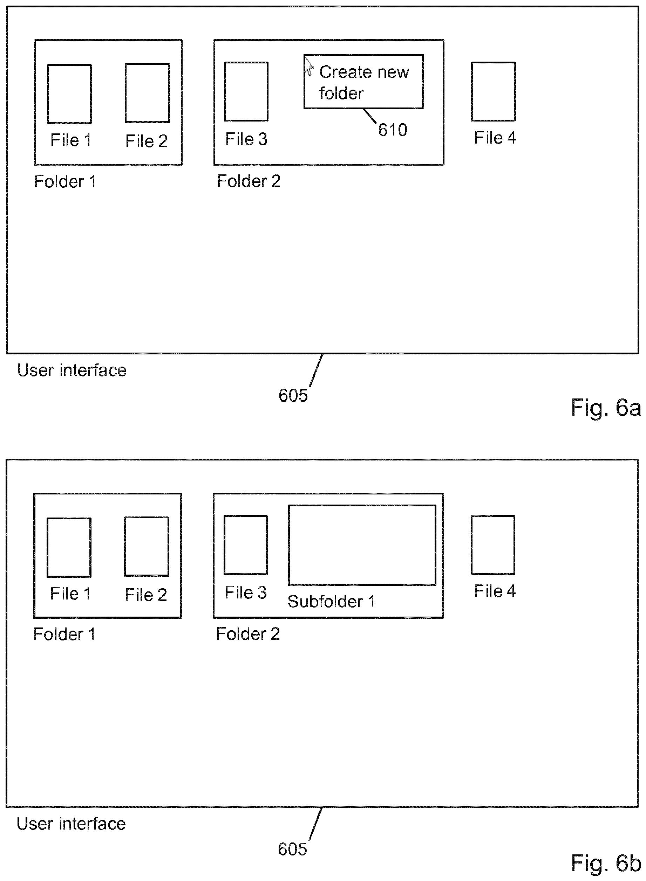

Another operation of the content management system 170 is the creation of a subfolder within a specified parent folder. A flowchart showing steps in this operation is shown in Figure 5, and Figure 6 shows a schematic representation of the user interface before and after the creation of a subfolder. Referring to Figure 5, in step 501 an instruction is received to create a new subfolder within a specified parent folder. As mentioned above, the instruction can be a user instruction, a programmatic instruction or some combination thereof.

In step 502 the content management system 170 creates a folder record in the folder database table (FOLDER database table 165), as for the creation of a folder within the user interface. A unique folder label for the subfolder is generated (step 503) and is stored in the folder record (step 504).

A record of the link between the parent folder and the subfolder is created and stored in the content management system 170. This can be done via the use of an additional column in the FOLDER database table or by use of a separate relationship table, or by some other way, as would readily be appreciated. The content management system 170 is then able to identify which folder or folders are contained within which other folder or folders.

In step 505 an instruction to assign one or more tags to the subfolder is received within the content management system 170, and in step 506 a folder tag record is created in the FOLDER_TAG database table 166. In step 507 the tags received as part of the instruction in step 505 (which as discussed above may be received separately or together with the instruction in step 501) are stored in the folder tag record in the FOLDER TAG database table 166.

The steps for creating a subfolder within a specified parent folder are similar to the steps in creating a folder within the user interface. The tags associated with the subfolder are those specified in the instruction (step 505). However it is desirable for the subfolder to also have associated therewith the tags associated with the parent folder - this ensures a more structured arrangement of the files within the folder structure in the user interface.

In the present implementation the association of the parent folder tags with the subfolder is not achieved by copying the parent folder tags to the subfolder FOLDER_TAG record - though this is an option in an alternative implementation. Rather, the parent folder tags are associated with the subfolder at runtime, for example when a user navigates to the subfolder, for example by interacting with the user interface. At runtime, a list of the parent folder tags together with the tags directly associated with the subfolder itself is compiled by the content management system 170. This list contains all of the tags associated with the subfolder. This approach has the advantage of minimising the use of system resources at the time of creating the subfolder ensuring that the process of creating one or more subfolders is less resource intensive. The association of the parent folder tags with the subfolder occurring at runtime enables a more efficient allocation of system resources as the content management system is used.

This approach also allows for the parent folder tags to change and for that change to be dynamically reflected in the subfolder without needing to rewrite the FOLDER_TAG record for the subfolder. This also saves some runtime overhead and helps to create a more efficient system. If the parent folder is itself a subfolder of another folder, then the list of tags associated with a particular folder is compiled from the tags associated with each folder higher up the hierarchy.

Steps 508-511 in Figure 5 relate to the association of the tags of the parent folder with the subfolder. In step 508 an instruction is received by the content management system 170 to navigate to the subfolder created as part of steps 501-507 as described above. The content management system 170 identifies the folder label of the parent folder (step 509) and identifies the folder tag record corresponding with that folder label (step 510). In step 511 the content management system 170 then compiles a list of tags contained in the identified folder tag record for the parent folder and tags contained in the folder tag record for the subfolder. The tags associated with the subfolder will then be both the tags specified in the instruction received in step 505 and the tags associated with the parent folder. The content management system 170 may of course be able to compare all these tags so as to avoid duplication of tags in the compiled list.

The compilation of the list of tags associated with the subfolder allows a created subfolder to inherit the tags of the folder in which it is located, and the tags of folders further up the hierarchy. This allows a consistent approach to the tags assigned to various folders and subfolders to be maintained throughout a file structure in a user interface, such as a hierarchical file structure.

As mentioned above, SQL code running in real time causes the dynamic modification of the user interface such that files 162 associated with tags that match those associated with the subfolder are caused to appear in the subfolder of the user interface. In one implementation, as described further below, when a user navigates to the parent folder, the files appearing in the subfolder no longer appear in the parent folder.

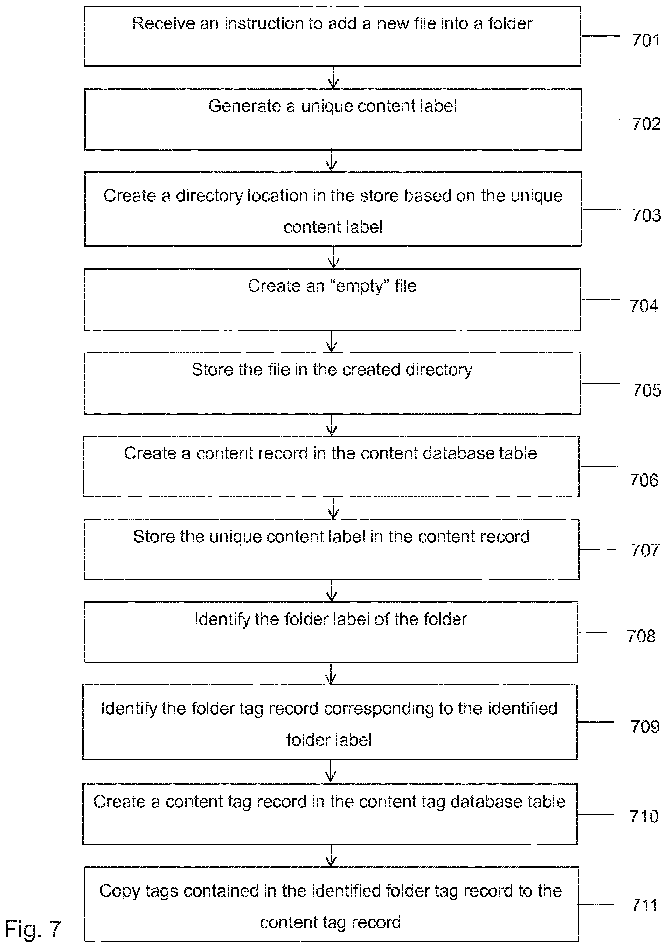

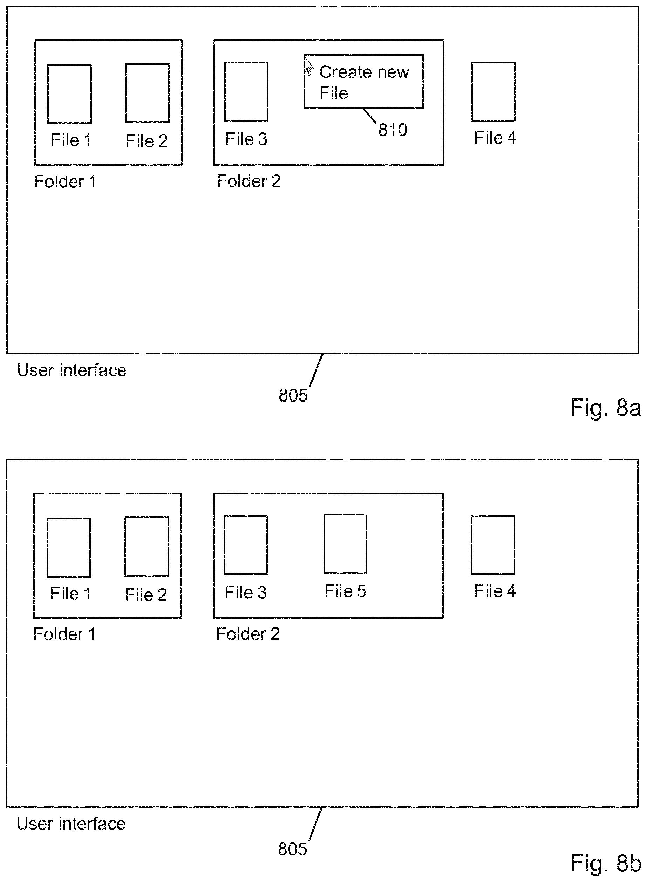

Turning now to the process for adding a new file into a folder within the user interface of the content management system 170, reference is made to Figure 7 showing a flowchart of steps in this process and Figures 8a and 8b showing a schematic user interface before and after the creation of a new file.

In step 701 the content management system 170 receives an instruction to add a new file into a folder within the user interface. The content management system 170 then generates a unique content label for the new file (step 702), and creates a directory location in the store 160 based on the unique content label (step 703). An "empty" file 162 is created (step 704), i.e. a new file within which data can later be stored as appropriate, which is stored in the created directory (step 705).

The content management system 170 then creates a content record in the CONTENT database table 167 (step 706) and stores the content label in the content record (step 707).

In order for the file to correctly appear in the folder within the user interface the relevant tags must then be associated with the new file. In step 708 the content management system 170 identifies the folder label of the folder. It then identifies the tags associated with the folder - in the process shown in Figure 7 this is done by identifying the folder tag record corresponding to the folder label (step 709). A content tag record is then created in the CONTENT_TAG database table 168 (step 710), and tags associated with the folder (here, tags contained in the folder tag record) are copied to the content tag record (step 711). As the newly created file then has the tags of the folder associated with the file, the file will then appear in that folder in the user interface.

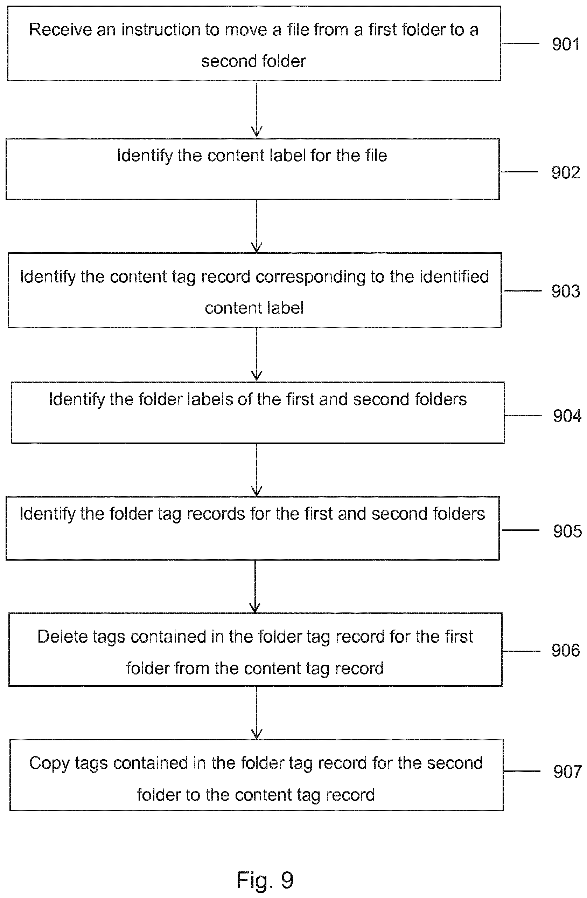

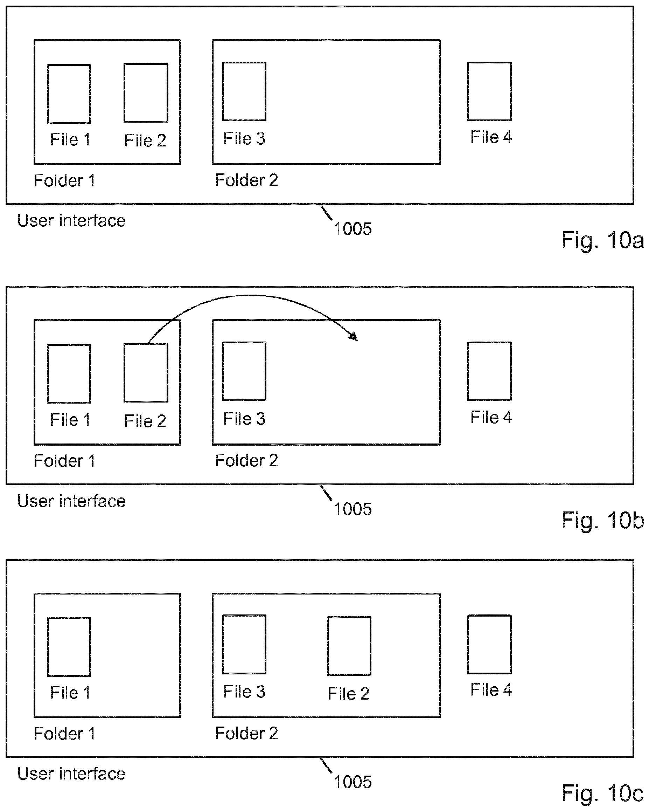

Functionality of a typical folder arrangement, such as "drag and drop" movement of files between folders, is also possible using the content management system 170. Figure 9 shows a flowchart of steps involved in such a process, and Figures 10a to 10c show a schematic user interface before and after the file movement (Figures 10a and 10c, respectively) and a schematic representation of the file movement (Figure 10b). Referring now to Figure 9, in step 901 the content management system 170 receives an instruction to move a file from a specified first folder to a specified second folder within the user interface. In a graphical user interface this may be by a user clicking on a file within the first folder, dragging it over a second folder and releasing it (see Figure 10b showing a schematic movement of a file (File 2) from Folder 1 to Folder 2 within a user interface). Of course other commands for giving the content management system this instruction are also possible.

In step 902 the content management system 170 identifies the content label for the file and in step 903 identifies the content tag record corresponding to that content label. The content management system 170 then identifies the tags associated with the first and second folders - in the process shown in Figure 9 this is done by identifying the folder labels of the first and second folders (step 904) and identifying the folder tag records for both of the first and second folders (step 905). The content management system 170 then, in step 906, deletes tags associated with the first folder (here, tags contained in the folder tag record for the first folder) from the content tag record for the file. Effectively this removes the link between the file and the first folder such that the file will no longer appear in the first folder in the user interface. In step 907 the content management system 170 then copies tags associated with the second folder (here, tags contained in the folder tag record for the second folder) to the content tag record for the file. Thus a link is created between the file and the second folder via the tags such that the file will then appear in the second folder in the user interface. Thus whilst the physical storage location of the file has not changed, the modification of tags in the content tag record for the file in response to user interaction ensures that within the user interface the file does move from the first folder to the second folder.

The process discussed above with reference to Figure 7, adding a new file into a folder, is similar to the process for uploading a file into the content management system 170. As discussed above, a new file can be added into a folder so as to inherit the tags associated with that folder and it will then be caused to appear in that folder in the user interface. An alternative is to specify tags to be associated with a new file and this will be discussed below in the context of uploading a file into the content management system 170. Of course it is possible both to inherit tags associated with the folder and to further associate with a file additional tags as received in a user/programmatic instruction.

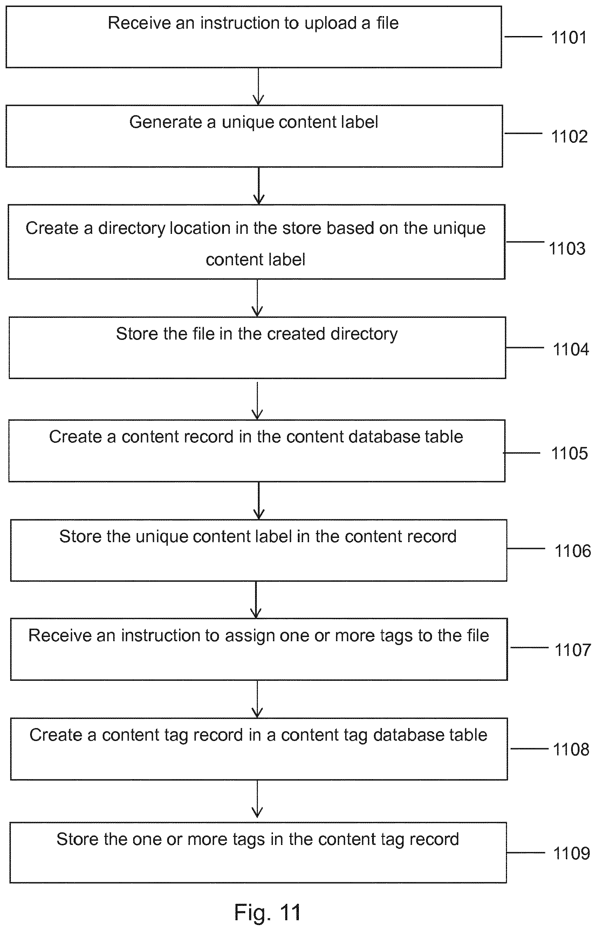

The process for uploading a file into the content management system 170 will now be discussed with reference to Figure 11. The content management system 170 receives an instruction to upload a file (step 1101) and generates a unique content label for that file (step 1102). The content management system then creates a directory location in the store 160 based on the unique content label (step 1103) and stores the file in the created directory (step 1104). In step 1105 the content management system 170 creates a content record in the CONTENT database table 167, and stores the unique content label in the content record (step 1106). In step 1107 the content management system 170 then receives an instruction to assign one or more tags to the uploaded file. Of course as mentioned above the instruction received in step 1107 can alternatively be received together with or as part of the instruction received in step 1101. The content management system 170 then creates a content tag record in the CONTENT_TAG database table 168 (step 1108) and stores the one or more tags in the content tag record (step 1109). In this way the folder or folders within the user interface within which it is desired for the uploaded file to appear can be selected based on the tag or tags that are associated with the file.

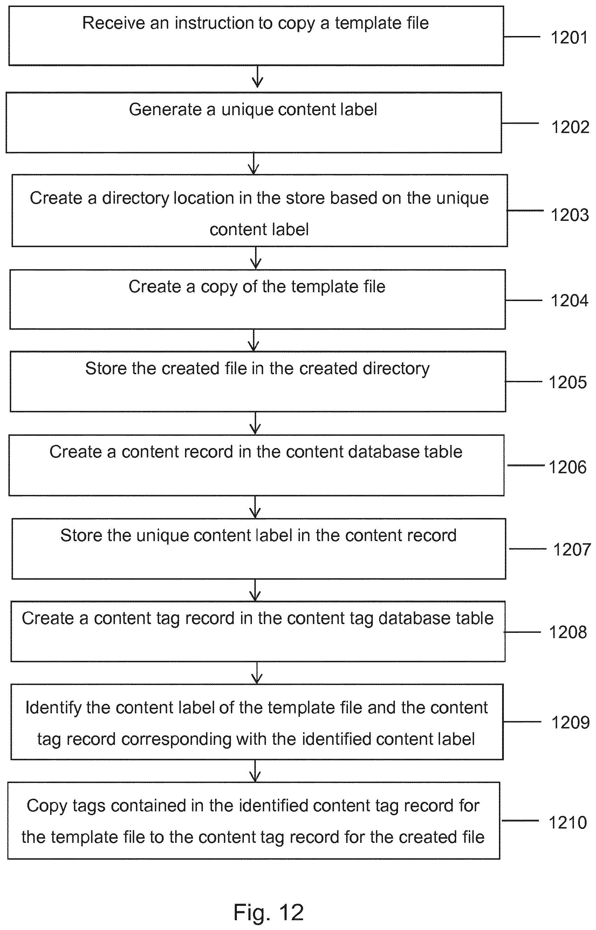

As discussed above it is possible for a file to inherit tags from a folder in which it is created and also for a subfolder to inherit tags associated with a parent folder in which it is created. It is also possible for a file to inherit tags from another file. An example of this will be given with reference to Figure 12, in which a file is created based on a template file within the content management system 170.

In step 1201 the content management system 170 receives an instruction to copy a template file. In step 1202 a unique content label for the copy of the file is generated by the content management system 170, and as described above a directory location is created based on the unique content label (step 1203). A copy of the template file is created (step 1204) and the created file is stored in the created directory (step 1205).

In step 1206 the content management system 170 creates a content record in the CONTENT database table 167. In step 1207 the unique content label is stored in the content record. In step 1208 a content tag record is created in the CONTENT_TAG database table 168. Steps 1209 and 1210 relate to the inheriting of tags from the template file. The content label of the template file is identified, and the content tag record corresponding with that identified content label is also identified (step 1209). The tags contained in that identified content tag record are then copied to the content tag record for the created file (step 1210).

Since all of the tags for the template file are inherited by the created file, the created file is caused to appear in each folder in the user interface in which the template file is arranged to appear. The created file can then of course be modified as desired whilst still remaining associated with the inherited tags. This functionality permits a consistency of location of files within folders in the user interface and simplifies the creation of such files and the user interactions with the user interface required for the creation of such files.

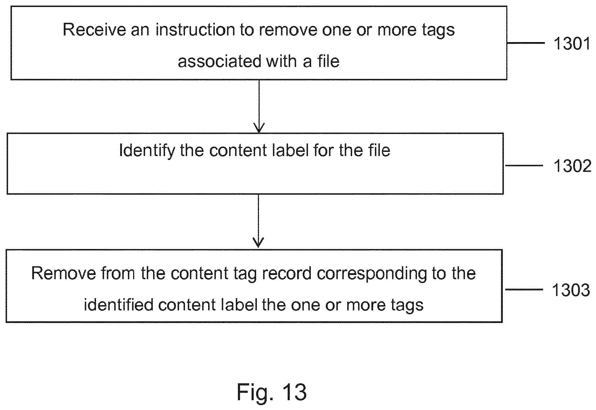

Whilst the discussion above has mentioned the addition of tags to a content tag database table so as to associate the tags with a file, it is also possible to remove one or more tags from the content tag database table so as to remove the link between those tags and the file. Referring now to Figure 13, in step 1301 the content management system 170 receives an instruction to remove one or more tags associated with a particular file. The content management system 170 then, in step 1302, identifies the content label for the file and in step 1303 removes from the content tag record corresponding to the identified content label the one or more tags specified in the instruction received in step 1301. In this way it is possible to cause a file to be removed from a folder within the user interface by removing from the content tag record for that file at least one of the tags required for the file to appear in that folder. This of course does not necessitate the deletion or removal of the file itself as the file will remain stored in the directory within the store 160 based on the content label of the file. This process will merely remove the file from the relevant folder or folders within the user interface.

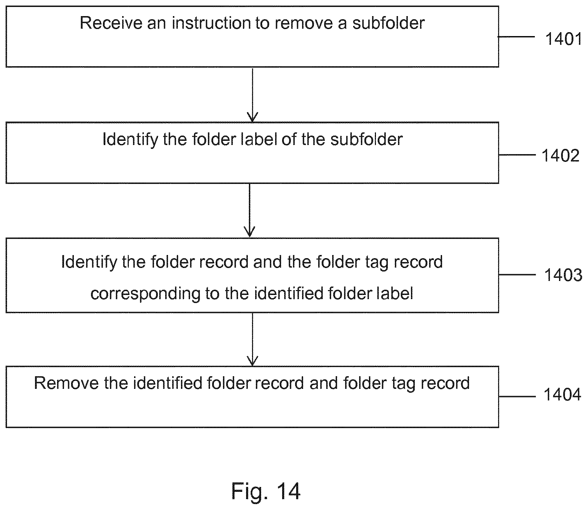

It is also possible to remove a subfolder from within the user interface. Referring to Figure 14, in step 1401 the content management system 170 receives an instruction to remove a subfolder. This instruction might be for example a user interacting with the user interface and deleting a particular subfolder or it might be a programmatic instruction or similar. In step 1402 the content management system 170 identifies the folder label of the subfolder and in step 1403 identifies the folder record and the folder tag record corresponding to that folder label. In step 1404 the content management system 170 then removes the identified folder record and folder tag record from the FOLDER database table 165 and FOLDER TAG database table 166. As a result of the removal of these records, the user interface will be modified to remove the subfolder from the user interface. Note that this does not delete any files previously contained within that subfolder but merely removes the subfolder itself from the user interface.

In one implementation the content management system 170 is arranged such that files contained within a subfolder in the user interface are not shown within a parent folder of that subfolder. An example of a SQL instruction for achieving this is given below.

The content management system 170 is arranged such that the removal of the subfolder will cause, at runtime, the restriction which resulted in the files not being shown in the parent folder in the user interface to be removed such that those files will then appear in the parent folder. In other words, the removal of the subfolder has the effect of causing files previously in that subfolder to appear in the parent folder of that subfolder instead.

In a related manner, if a new folder is created in a parent folder and files within the parent folder are then dragged and dropped (or otherwise moved) into the subfolder, the content management system 170 can operate at runtime such that the moved files will appear solely in the subfolder and not in the parent folder.

In one implementation, the content management system 170 includes a security system. The security system is based around tag names and values. The security system can permit or deny the addition/modification/removal of one or more tags by a user or group of users. An instruction received by the content management system 170 comprises a permission value. A permission criterion (or criteria) is stored in a permissions database table. This specifies which actions are/are not permitted. The content management system 170 compares the received permission value with the permission criteria in the permissions database table. If the permissions criteria are satisfied, the content management system 170 performs the requested action.

Further to the discussion above, a more specific illustration will now be given of an operation of the content management system 170.

It may be desired to show an order document for a particular supplier in a folder related to that supplier. For example, for a supplier named "S002", the order document could be located in the following folder: /Suppliers/S002/Orders. Order documents are also related to particular contracts, and a user may wish to locate the order document with knowledge of the contract only. For this reason, for a given contract (C003, say), another copy of the above order document could be located in the following folder: /Contracts/C003/Orders.

A single order document is thus required to be located in two places in a conventional directory structure. This uses twice the physical storage compared to storing only a single copy of the order document.

Using the content management system 170 described above, this can be avoided. The document can be tagged as being an order document - with a tag of name DOCTYPE and value ORDER, and as being related to both supplier S002 (tag of name SUPPLIER and value S002) and contract C003 (tag of name CONTRACT and value C003).

Files with tags DOCTYPE:ORDER and SUPPLIER:S002 can be shown in folder /Suppliers/S002/Orders, and files with tags DOCTYPE:ORDER and CONTRACT:C003 can be shown in folder /Contracts/C003/Orders. Since the single order document has all of these tags associated with it, it will appear in both folders. Examples of SQL code to show the file(s) in these folders are:

```
 -- Orders for Supplier S002
 SELECT
    [fields]
    FROM FILE
    WHERE
    EXISTS (SELECT * FROM CONTENT_TAG WHERE
       CONTENT_TAG.CONTENTID=CONTENT.CONTENTID AND
       CONTENT_TAG.NAME='SUPPLIER' AND
       CONTENT_TAG.VALUE='S002')
       AND EXISTS (SELECT * FROM CONTENT_TAG WHERE
       CONTENT_TAG.CONTENTID=CONTENT.CONTENTID AND
       CONTENT_TAG.NAME='DOCTYPE' AND
       CONTENT_TAG.VALUE='ORDER')
```

```
-- Orders for Contract C003
 SELECT
    [fields]
    FROM FILE
    WHERE
    EXISTS (SELECT * FROM CONTENT_TAG WHERE
       CONTENT_TAG.CONTENTID=CONTENT.CONTENTID AND
       CONTENT_TAG.NAME='CONTRACT' AND
       CONTENT_TAG.VALUE='C003')
       AND EXISTS (SELECT * FROM CONTENT_TAG WHERE
       CONTENT_TAG.CONTENTID=CONTENT.CONTENTID AND
       CONTENT_TAG.NAME='DOCTYPE' AND
       CONTENT_TAG.VALUE='ORDER')
```

There also exists the possibility of a further level of classifying data - for example whether the order relates to plant or materials. It may be desired to subdivide the folders as follows: /Suppliers/S002/Orders/Plant and /Suppliers/S002/Orders/Materials. With the content management system 170 described above, subfolders "Plant" and "Materials" can be created in the "Orders" parent folder. These subfolders will inherit the tags associated with the parent folder (here: DOCTYPE:ORDER and SUPPLIER:S002). Additional tags ORDERTYPE:PLANT and ORDERTYPE:MATERIALS can be associated with the "Plant" and "Materials" subfolders, respectively. Thus order documents that are tagged as "Plant" orders will appear in the "Plant" subfolder, and similarly, "Materials" tagged order documents will appear in the "Materials" subfolder. Thus, if a folder contains a set of mixed file types (i.e. it is possible to define more than one set of tags for files in a folder), then a subfolder can be created for one set of tags and the relevant files will appear to move into the subfolder in the user interface without requiring explicit move instructions for each file.

The content management system 170 includes functionality to automatically exclude plant and/or materials orders from the Orders parent folder. This is achieved by detecting the tags assigned to subfolders of a parent folder and excluding files associated with those tags from the parent folder. For the /Suppliers/S002/Orders folder this functionality could be represented in SQL as:

```
 SELECT
    [fields]
    FROM FILE
    WHERE
    EXISTS (SELECT * FROM CONTENT_TAG WHERE
       CONTENT_TAG.CONTENTID=CONTENT.CONTENTID AND
       CONTENT_TAG.NAME='SUPPLIER' AND
       CONTENT_TAG.VALUE='S002')
       AND EXISTS (SELECT * FROM CONTENT_TAG WHERE
       CONTENT_TAG.CONTENTID=CONTENT.CONTENTID AND
       CONTENT_TAG.NAME='DOCTYPE' AND
       CONTENT_TAG.VALUE='ORDER')
       AND NOT EXISTS (SELECT * FROM CONTENT_TAG WHERE
       CONTENT_TAG.CONTENTID=CONTENT.CONTENTID AND
       CONTENT_TAG.NAME='ORDERTYPE' AND
       CONTENT_TAG.VALUE='MATERIAL')
```

It will be seen that folders in the user interface of the content management system 170 "self-organise" by virtue of subfolder tags, and the folder/subfolder hierarchy can be dynamically defined at runtime of the content management system 170 without onerous manual file moving.

The present embodiments of the invention may be embodied in various different forms for example: a method, a computer (i.e. web enabled device or server) arranged under the control of software, a computer program, a computer program stored on a machine readable record carrier such as a disk (hard disc, CD-ROM, DVD-ROM, or similar machine readable data carrier) or memory module, or as carried on a signal.

## Claims

1. A content management system for content items stored in a store (160) on a computing device (100), the content management system enabling user interaction with the content items (162) independently of the structure of the store, the content management system comprising a computer arranged under the control of software to:
create a user interface (405) for display so as to allow a user to view and interact with the at least one content item, the user interface comprising a hierarchial structure of folders and files within those folders each file corresponding to a content item in the store;
hold a set of file data (164) relating to the folders and files and identifiers associated therewith for use in determining how the folders and files are displayed in the user interface, the structure of the interface being independent of the structure of the store;
receive a first instruction from a user to associate at least one first identifier of a set of identifiers with at least one folder record (165) and to add an entry (166) in the set of file data to associate the at least one first identifier with the at least one folder record (165) within the content management system in response to the received first instruction; and
receive a second instruction from a user to associate at least one second identifier of the set of identifiers with at least one content item (167) stored in the store on the computing device and to add an entry (168) in the set of file data to associate the at least one second identifier with the file corresponding to the respective content item (167) within the content management system in response to the received second instruction; wherein the computer is arranged under the control of software to create the user interface by
assigning the file corresponding to the respective content item to the at least one folder in the user interface in dependence on a comparison between the at least one first identifier associated (166) with the respective folder record (165) to which the at least one folder corresponds and the at least one second identifier associated (168) with the respective content item (167), so that the file appears in the user interface in a folder determined by the at least one first identifier and the at least one second identifier.

2. The content management system according to claim 1, wherein the computer is arranged under the control of software to:
output a signal from the content management system, the output signal being arranged to cause display of at least a portion of the user interface (405) on a display for viewing by a user.

3. The content management system according to any preceding claim, wherein the computer is arranged under the control of software to:
receive an instruction within the content management system to copy the file corresponding to a content item within an existing folder in the user interface to another existing folder within the user interface;
identify the folder of the user interface to which the file corresponding to the content item is to be copied;
identify the identifier or identifiers associated (166) with the identified folder; and associate the identified identifier or identifiers (168) with the unique content item label for the content item so as to additionally associate the identified identifier or identifiers with the content item such that the file corresponding to the content item is caused to additionally appear in the identified folder in the user interface (405).

4. The content management system according to any preceding claim, wherein the computer is arranged under the control of software to:
receive within the content management system an instruction to move the file corresponding to a content item (167) in the user interface from a fifth folder to a sixth folder;
identify the identifier or identifiers associated with the fifth folder;
identify the identifier or identifiers associated with the sixth folder;
remove the association between the identified identifier or identifiers associated (168) with the fifth folder and the content item; and
associate the identified identifier or identifiers associated with the sixth folder with the content item (167) such that the file corresponding to the content item is caused to appear in the sixth folder in the user interface in place of appearing in the fifth folder.

5. The content management system according to any preceding claim, wherein the computer is arranged under the control of software to:
receive an instruction to associate a plurality of identifiers (168) with the content item (167), and associate the plurality of identifiers with the content item, and where at least a subset of the plurality of identifiers is associated with a third folder of the user interface and at least another subset of the plurality of identifiers is associated with a fourth folder of the user interface, the fourth folder being a subfolder of the third folder, to assign within the content management system the file corresponding to the content item to the fourth folder and prevent the file corresponding to the content item being assigned to the third folder.

6. The content management system according to any preceding claim, wherein the identifier comprises a first identifier portion and a second identifier portion, the first identifier portion comprising the name of a variable, and the second identifier portion comprising the value of the variable.

7. The content management system according to any preceding claim, wherein the identifier is modifiable by a computer program or by a user, and the computer (100) is arranged under the control of software, where the identifier associated (168) with the content item (167) is modified, to modify the user interface to show the file corresponding to the content item within another and/or a different folder in dependence on the modified identifier.

8. The content management system according to any preceding claim, wherein the computer is arranged under the control of software to:
create within the content management system a unique folder record label for each folder record, store the folder record label as part of the folder record (165), and associate (166) at least one of the set of identifiers with the folder record label so as to associate the at least one of the set of identifiers with the respective folder record; and/or to
create within the content management system a unique content item label for each content item (167), and associate (168) at least one of the set of identifiers with the content item label so as to associate the at least one of the set of identifiers with the respective content item, and to
create, as part of storing the at least one content item within the store on the computing device, at least one directory within the store, the filepath of which directory is dependent on the content item label of the respective content item, and to store the respective content item in the respective directory.

9. The content management system according to any preceding claim, wherein the computer is arranged under the control of software to:
receive an instruction within the content management system to assign an additional content item to an existing folder in the user interface or to create the additional content item to assign to an existing folder in the user interface;
create within the content management system a unique content item label for the additional content item (167);
add the additional content item and store the additional content item in the store;
identify the folder of the user interface to which the additional content item is to be assigned;
identify the identifier or identifiers associated with the identified folder (166); and
associate (168) the identified identifier or identifiers with the unique content item label for the additional content item so as to associate the identified identifier or identifiers with the additional content item (167) such that the file corresponding to the additional content item is caused to appear in the identified folder in the user interface.

10. The content management system according to any preceding claim, wherein the computer is arranged under the control of software to:
receive an instruction within the content management system to create a subfolder within a folder of the user interface;
create a new folder record (165) within the content management system corresponding to the subfolder;
identify the folder of the user interface within which the subfolder is created;
identify the identifier or identifiers associated (166) with the identified folder;
associate the identified identifier or identifiers with the new folder record; and
associate at least one additional identifier with the new folder record.

11. The content management system according to any preceding claim, wherein the computer is arranged under the control of software to:
verify within the content management system that a received instruction satisfies at least one permission criterion, and to perform the actions requested as part of the received instruction only if the received instruction does satisfy the permission criterion, optionally wherein the computer is arranged under the control of software to receive as part of the received instruction a permission value, which permission value is dependent on the origin of the received instruction, compare the permission value to a permission record stored within the content management system so as to determine whether the received instruction satisfies the permission criterion.

12. A computing device comprising the content management system according to any preceding claim.

13. A computer program comprising code portions which when loaded and run on a computer cause the computer to configure a content management system according to any one of claims 1 to 11.

14. A method of operating a content management system for content items stored in a store (160) on a computing device (100), the content management system enabling user interaction with the content items independently of the structure of the store, the method comprising the steps of:
creating a user interface (405) for display so as to allow a user to view and interact with the at least one content item, the user interface comprising a hierarchial structure of folders and files within those folders each file corresponding to a content item in the store;
holding a set of file data (164) relating to the folders and files and identifiers associated therewith for use in determining how the folders and files are displayed in the user interface, the structure of the interface being independent of the structure of the store;
receiving a first instruction from a user to associate at least one of a set of identifiers with at least one folder record (165) and adding an entry (166) in the set of file data to associate the at least one of the set of identifiers with the at least one folder record within the content management system in response to the received first instruction; and
receiving a second instruction from a user to associate at least one of the set of identifiers with at least one content item (167) stored in the store on the computing device and adding an entry (168) in the set of file data to associate the at least one of the set of identifiers with the file corresponding to the respective content item (167) within the content management system in response to the received second instruction; and
assigning the file corresponding to the respective content item (167) to the at least one folder in the user interface in dependence on a comparison between the identifier or identifiers associated (168) with the respective content item and the identifier or identifiers associated (166) with the respective folder record (165) to which the at least one folder corresponds, so that the file appears in the user interface in a folder determined by the at least one first identifier and the at least one second identifier.

15. A method according to claim 14, comprising the steps of:
receiving an instruction to associate a plurality of identifiers (168) with the content item (167), and associating the plurality of identifiers with the content item, and where at least a subset of the plurality of identifiers is associated with a third folder of the user interface and at least another subset of the plurality of identifiers is associated with a fourth folder of the user interface, the fourth folder being a subfolder of the third folder, assigning within the content management system the file corresponding to the content item to the fourth folder and preventing the file corresponding to the content item being assigned to the third folder.

16. A method according to any one of claims 14 to 15, comprising the steps of:
receiving within the content management system an instruction to move the file corresponding to a content item in the user interface from a fifth folder to a sixth folder;
identifying the identifier or identifiers associated with the fifth folder;
identifying the identifier or identifiers associated with the sixth folder;
removing the association between the identified identifier or identifiers associated (168) with the fifth folder and the content item; and
associating the identified identifier or identifiers associated with the sixth folder with the content item (167) such that the file corresponding to the content item is caused to appear in the sixth folder in the user interface in place of appearing in the fifth folder.

## Patentansprüche

1. Inhaltsmanagementsystem für Inhaltselemente, die in einem Speicher (160) auf einem Computergerät (100) gespeichert sind, wobei das Inhaltsmanagementsystem Benutzerinteraktion mit den Inhaltselementen (162) unabhängig von der Struktur des Speichers ermöglicht, wobei das Inhaltsmanagementsystem einen Computer umfasst, der so ausgelegt ist, dass er Software-gesteuert Folgendes durchführt:
Erzeugen einer Benutzeroberfläche (405) zur Anzeige, damit ein Benutzer das mindestens eine Inhaltselement betrachten und damit interagieren kann, wobei die Benutzeroberfläche eine hierarchische Struktur von Ordnern und Dateien innerhalb dieser Ordner umfasst, wobei jede Datei einem Inhaltselement in dem Speicher entspricht;
Halten eines Satzes von Dateidaten (164) in Bezug auf die Ordner und Dateien und damit assoziierte Kennungen zur Verwendung beim Bestimmen, wie die Ordner und Dateien in der Benutzeroberfläche angezeigt werden, wobei die Struktur der Schnittstelle unabhängig von der Struktur des Speichers ist;
Empfangen einer ersten Anweisung von einem Benutzer zum Assoziieren mindestens einer ersten Kennung eines Satzes von Kennungen mit mindestens einem Ordnerdatensatz (165) und zum Hinzufügen eines Eintrags (166) zu dem Satz von Dateidaten, um die mindestens eine erste Kennung mit dem mindestens einen Ordnerdatensatz (165) innerhalb des Inhaltsmanagementsystems als Reaktion auf die empfangene erste Anweisung zu assoziieren; und
Empfangen einer zweiten Anweisung von einem Benutzer zum Assoziieren mindestens einer zweiten Kennung des Satzes von Kennungen mit mindestens einem in dem Speicher auf dem Computergerät gespeicherten Inhaltselement (167) und zum Hinzufügen eines Eintrags (168) zu dem Satz von Dateidaten, um die mindestens eine zweite Kennung mit der Datei entsprechend dem jeweiligen Inhaltselement (167) innerhalb des Inhaltsmanagementsystems als Reaktion auf die empfangene zweite Anweisung zu assoziieren; wobei der Computer so ausgelegt ist, dass er Software-gesteuert die Benutzeroberfläche erzeugt durch
Zuordnen der dem jeweiligen Inhaltselement entsprechenden Datei zu dem mindestens einen Ordner in der Benutzeroberfläche in Abhängigkeit von einem Vergleich zwischen der mindestens einen ersten Kennung, die mit dem jeweiligen Ordnerdatensatz (165) assoziiert (166) ist, dem der mindestens eine Ordner entspricht, und der mindestens einen zweiten Kennung, die mit dem jeweiligen Inhaltselement (167) assoziiert (168) ist, so dass die Datei in der Benutzeroberfläche in einem Ordner erscheint, der durch die mindestens eine erste Kennung und die mindestens eine zweite Kennung bestimmt wird.

2. Inhaltsmanagementsystem nach Anspruch 1, wobei der Computer so ausgelegt ist, dass er Software-gesteuert Folgendes durchführt:
Ausgeben eines Signals von dem Inhaltsmanagementsystem, wobei das Ausgabesignal so ausgelegt ist, dass es die Anzeige mindestens eines Teils der Benutzeroberfläche (405) auf einem Display zur Betrachtung durch einen Benutzer bewirkt.

3. Inhaltsmanagementsystem nach einem vorherigen Anspruch, wobei der Computer so ausgelegt ist, dass er Software-gesteuert Folgendes durchführt:
Empfangen einer Anweisung innerhalb des Inhaltsmanagementsystems zum Kopieren der einem Inhaltselement innerhalb eines existierenden Ordners in der Benutzeroberfläche entsprechenden Datei in einen anderen existierenden Ordner innerhalb der Benutzeroberfläche;
Identifizieren des Ordners der Benutzerschnittstelle, in den die dem Inhaltselement entsprechende Datei kopiert werden soll;
Identifizieren der ein oder mehreren mit dem identifizierten Ordner assoziierten (166) Kennungen; und
Assoziieren der ein oder mehreren identifizierten Kennungen (168) mit der eindeutigen Inhaltselementbezeichnung für das Inhaltselement, um die ein oder mehreren identifizierten Kennungen zusätzlich mit dem Inhaltselement zu assoziieren, so dass bewirkt wird, dass die dem Inhaltselement entsprechende Datei zusätzlich in dem identifizierten Ordner in der Benutzeroberfläche (405) erscheint.

4. Inhaltsmanagmentsystem nach einem vorherigen Anspruch, wobei der Computer so ausgelegt ist, dass er Software-gesteuert Folgendes durchführt:
Empfangen, innerhalb des Inhaltsmanagementsystems, einer Anweisung zum Verschieben der einem Inhaltselement (167) in der Benutzeroberfläche entsprechenden Datei von einem fünften Ordner zu einem sechsten Ordner;
Identifizieren der ein oder mehreren mit dem fünften Ordner assoziierten Kennungen;
Identifizieren der ein oder mehreren mit dem sechsten Ordner assoziierten Kennungen;
Aufheben der Assoziation zwischen den ein oder mehreren mit dem fünften Ordner assoziierten (168) identifizierten Kennungen und dem Inhaltselement; und
Assoziieren der ein oder mehreren mit dem sechsten Ordner assoziierten identifizierten Kennungen mit dem Inhaltselement (167), so dass bewirkt wird, dass die dem Inhaltselement entsprechende Datei in der Benutzeroberfläche im sechsten Ordner anstatt im fünften Ordner erscheint.

5. Inhaltsmanagementsystem nach einem vorherigen Anspruch, wobei der Computer so ausgelegt ist, dass er Software-gesteuert Folgendes durchführt:
Empfangen einer Anweisung zum Assoziieren mehrerer Kennungen (168) mit dem Inhaltselement (167) und zum Assoziieren mehrerer Kennungen mit dem Inhaltselement, und wobei mindestens eine Teilmenge der mehreren Kennungen mit einem dritten Ordner der Benutzeroberfläche assoziiert ist und mindestens eine andere Teilmenge der mehreren Kennungen mit einem vierten Ordner der Benutzeroberfläche assoziiert ist, wobei der vierte Ordner ein Unterordner des dritten Ordners ist, um innerhalb des Inhaltsmanagementsystems die dem Inhaltselement entsprechende Datei dem vierten Ordner zuzuordnen und zu verhindern, dass die dem Inhaltselement entsprechende Datei dem dritten Ordner zugeordnet wird.

6. Inhaltsmanagementsystem nach einem vorherigen Anspruch, wobei die Kennung einen ersten Kennungsteil und einen zweiten Kennungsteil umfasst, wobei der erste Kennungsteil den Namen einer Variablen umfasst und der zweite Kennungsteil den Wert der Variablen umfasst.

7. Inhaltsmanagementsystem nach einem vorherigen Anspruch, wobei die Kennung von einem Computerprogramm oder einem Benutzer modifiziert werden kann und der Computer (100) so ausgelegt ist, dass er Software-gesteuert, wenn die mit dem Inhaltselement (167) assoziierte (168) Kennung modifiziert wird, die Benutzeroberfläche modifiziert, um die dem Inhaltselement entsprechende Datei innerhalb eines anderen und/oder eines unterschiedlichen Ordners in Abhängigkeit von der modifizierten Kennung zu zeigen.

8. Inhaltsmanagementsystem nach einem vorherigen Anspruch, wobei der Computer so ausgelegt ist, dass er Software-gesteuert Folgendes durchführt:
Erzeugen, innerhalb des Inhaltsmanagementsystems, einer eindeutigen Ordnerdatensatzbezeichnung für jeden Ordnerdatensatz, Speichern der Ordnerdatensatzbezeichnung als Teil des Ordnerdatensatzes (165) und Assoziieren (166) mindestens einer aus dem Satz von Kennungen mit der Ordnerdatensatzbezeichnung, um die mindestens eine aus dem Satz von Kennungen mit dem jeweiligen Ordnerdatensatz zu assoziieren; und/oder
Erzeugen, innerhalb des Inhaltsmanagementsystems, einer eindeutigen Inhaltselementbezeichnung für jedes Inhaltselement (167) und Assoziieren (168) mindestens einer aus dem Satz von Kennungen mit der Inhaltselementbezeichnung, um die mindestens eine aus dem Satz von Kennungen mit dem jeweiligen Inhaltselement zu assoziieren, und
Erzeugen, als Teil des Speicherns des mindestens einen Inhaltselements innerhalb des Speichers auf dem Computergerät, mindestens eines Verzeichnisses innerhalb des Speichers, wobei der Dateipfad dieses Verzeichnisses von der Inhaltselementbezeichnung des jeweiligen Inhaltselements abhängt, und Speichern des jeweiligen Inhaltselements in dem jeweiligen Verzeichnis.

9. Inhaltsmanagementsystem nach einem vorherigen Anspruch, wobei der Computer so ausgelegt ist, dass er Software-gesteuert Folgendes durchführt:
Empfangen einer Anweisung innerhalb des Inhaltsmanagementsystems zum Zuordnen eines zusätzlichen Inhaltselements zu einem existierenden Ordner in der Benutzeroberfläche oder zum Erzeugen des zusätzlichen Inhaltselements, um es einem existierenden Ordner in der Benutzeroberfläche zuzuordnen;
Erzeugen, innerhalb des Inhaltsmanagementsystems, einer eindeutigen Inhaltselementbezeichnung für das zusätzliche Inhaltselement (167);
Hinzufügen des zusätzlichen Inhaltselements und Speichern des zusätzlichen Inhaltselements in dem Speicher;
Identifizieren des Ordners der Benutzeroberfläche, dem das zusätzliche Inhaltselement zugeordnet werden soll;
Identifizieren der ein oder mehreren mit dem identifizierten Ordner (166) assoziierten Kennungen; und
Assoziieren (168) der ein oder mehreren identifizierten Kennungen mit der eindeutigen Inhaltselementbezeichnung für das zusätzliche Inhaltselement, um die ein oder mehreren identifizierten Kennungen mit dem zusätzlichen Inhaltselement (167) zu assoziieren, so dass bewirkt wird, dass die dem zusätzlichen Inhaltselement entsprechende Datei in dem identifizierten Ordner in der Benutzeroberfläche erscheint.

10. Inhaltsmanagementsystem nach einem vorherigen Anspruch, wobei der Computer so ausgelegt ist, dass er Software-gesteuert Folgendes durchführt:
Empfangen einer Anweisung innerhalb des Inhaltsmanagementsystems zum Erzeugen eines Unterordners innerhalb eines Ordners der Benutzeroberfläche;
Erzeugen eines neuen Ordnerdatensatzes (165) innerhalb des Inhaltsmanagementsystems entsprechend dem Unterordner;
Identifizieren des Ordners der Benutzeroberfläche, innerhalb dessen der Unterordner erzeugt wird;
Identifizieren der ein oder mehreren mit dem identifizierten Ordner assoziierten (166) Kennungen;
Assoziieren der ein oder mehreren identifizierten Kennungen mit dem neuen Ordnerdatensatz; und
Assoziieren mindestens einer zusätzlichen Kennung mit dem neuen Ordnerdatensatz.

11. Inhaltsmanagementsystem nach einem vorherigen Anspruch, wobei der Computer so ausgelegt ist, dass er Software-gesteuert Folgendes durchführt:
Überprüfen innerhalb des Inhaltsmanagementsystems, dass eine empfangene Anweisung mindestens ein Zulassungskriterium erfüllt, und Durchführen der als Teil der empfangenen Anweisung angeforderten Aktionen nur dann, wenn die empfangene Anweisung das Zulassungskriterium erfüllt, wobei der Computer optional so ausgelegt ist, dass er Software-gesteuert einen Zulassungswert als Teil der empfangenen Anweisung empfängt, wobei der Zulassungswert von der Herkunft der empfangenen Anweisung abhängt, und den Zulassungswert mit einem innerhalb des Inhaltsmanagementsystems gespeicherten Zulassungsdatensatz vergleicht, um festzustellen, ob die empfangene Anweisung das Zulassungskriterium erfüllt.

12. Computergerät, das das Inhaltsmanagementsystem nach einem vorherigen Anspruch umfasst.

13. Computerprogramm mit Code-Teilen, die bewirken, wenn sie auf einen Computer geladen und darauf abgearbeitet werden, dass der Computer ein Inhaltsmanagementsystem nach einem der Ansprüche 1 bis 11 konfiguriert.

14. Verfahren zum Betreiben eines Inhaltsmanagementsystems für Inhaltselemente, die in einem Speicher (160) auf einem Computergerät (100) gespeichert sind, wobei das Inhaltsmanagementsystem Benutzerinteraktion mit den Inhaltselementen unabhängig von der Struktur des Speichers ermöglicht, wobei das Verfahren die folgenden Schritte beinhaltet:
Erzeugen einer Benutzeroberfläche (405) zur Anzeige, damit ein Benutzer das mindestens eine Inhaltselement betrachten und damit interagieren kann, wobei die Benutzeroberfläche eine hierarchische Struktur von Ordnern und Dateien innerhalb dieser Ordner umfasst, wobei jede Datei einem Inhaltselement in dem Speicher entspricht;
Halten eines Satzes von Dateidaten (164) in Bezug auf die Ordner und Dateien und damit assoziierte Kennungen zur Verwendung beim Bestimmen, wie die Ordner und Dateien in der Benutzeroberfläche angezeigt werden, wobei die Struktur der Schnittstelle von der Struktur des Speichers unabhängig ist;
Empfangen einer ersten Anweisung von einem Benutzer zum Assoziieren mindestens einer aus einem Satz von Kennungen mit mindestens einem Ordnerdatensatz (165) und Hinzufügen eines Eintrags (166) zu dem Satz von Dateidaten, um die mindestens eine aus dem Satz von Kennungen mit dem mindestens einen Ordnerdatensatz innerhalb des Inhaltsmanagementsystems als Reaktion auf die empfangene erste Anweisung zu assoziieren; und
Empfangen einer zweiten Anweisung von einem Benutzer zum Assoziieren mindestens einer aus dem Satz von Kennungen mit mindestens einem in dem Speicher auf dem Computergerät gespeicherten Inhaltselement (167) und Hinzufügen eines Eintrags (168) zu dem Satz von Dateidaten, um die mindestens eine aus dem Satz von Kennungen mit der dem jeweiligen Inhaltselement (167) innerhalb des Inhaltsmanagementsystems entsprechenden Datei als Reaktion auf die empfangene zweite Anweisung zu assoziieren; und
Zuordnen der dem jeweiligen Inhaltselement (167) entsprechenden Datei zu dem mindestens einen Ordner in der Benutzeroberfläche in Abhängigkeit von einem Vergleich zwischen den ein oder mehreren mit dem jeweiligen Inhaltselement assoziierten (168) Kennungen und den ein oder mehreren Kennungen, die mit dem jeweiligen Ordnerdatensatz (165) assoziiert (166) sind, dem der mindestens eine Ordner entspricht, so dass die Datei in der Benutzeroberfläche in einem Ordner erscheint, der durch die mindestens eine erste Kennung und die mindestens eine zweite Kennung bestimmt wird.

15. Verfahren nach Anspruch 14, das die folgenden Schritte beinhaltet:
Empfangen einer Anweisung zum Assoziieren mehrerer Kennungen (168) mit dem Inhaltselement (167) und zum Assoziieren der mehreren Kennungen mit dem Inhaltselement, und wobei mindestens eine Teilmenge der mehreren Kennungen mit einem dritten Ordner der Benutzeroberfläche assoziiert ist und mindestens eine andere Teilmenge der mehreren Kennungen mit einem vierten Ordner der Benutzeroberfläche assoziiert ist, wobei der vierte Ordner ein Unterordner des dritten Ordners ist, Zuordnen, innerhalb des Inhaltsmanagementsystems, der dem Inhaltselement entsprechenden Datei zu dem vierten Ordner und Verhindern, dass die dem Inhaltselement entsprechende Datei dem dritten Ordner zugeordnet wird.

16. Verfahren nach einem der Ansprüche 14 bis 15, das die folgenden Schritte beinhaltet:
Empfangen, innerhalb des Inhaltsmanagementsystems, einer Anweisung zum Verschieben der einem Inhaltselement in der Benutzeroberfläche entsprechenden Datei von einem fünften Ordner zu einem sechsten Ordner;
Identifizieren der ein oder mehreren mit dem fünften Ordner assoziierten Kennungen;
Identifizieren der ein oder mehreren mit dem sechsten Ordner assoziierten Kennungen;
Aufheben der Assoziation zwischen den ein oder mehreren mit dem fünften Ordner und dem Inhaltselement assoziierten (168) identifizierten Kennungen; und
Assoziieren der ein oder mehreren mit dem sechsten Ordner assoziierten identifizierten Kennungen mit dem Inhaltselement (167), so dass bewirkt wird, dass die dem Inhaltselement entsprechende Datei in der Benutzeroberfläche im sechsten Ordner anstatt im fünften Ordner erscheint.

## Revendications

1. Un système de gestion de contenus destiné à des éléments de contenu conservés en mémoire dans un espace mémoire (160) sur un dispositif informatique (100), le système de gestion de contenus permettant une interaction d'utilisateur avec les éléments de contenu (162) indépendamment de la structure de l'espace mémoire, le système de gestion de contenus comprenant un ordinateur agencé sous le contrôle d'un logiciel de façon à :
créer une interface utilisateur (405) à des fins d'affichage de façon à permettre à un utilisateur de visionner et d'interagir avec le au moins un élément de contenu, l'interface utilisateur comprenant une structure hiérarchique de dossiers et de fichiers à l'intérieur de ces dossiers, chaque fichier correspondant à un élément de contenu dans l'espace mémoire,
détenir un ensemble de données de fichier (164) relatives aux dossiers et fichiers et des identifiants associés à ceux-ci pour une utilisation dans la détermination de la manière dont les dossiers et fichiers sont affichés dans l'interface utilisateur, la structure de l'interface étant indépendante de la structure de l'espace mémoire,
recevoir une première instruction à partir d'un utilisateur d'associer au moins un premier identifiant d'un ensemble d'identifiants à au moins un enregistrement de dossier (165) et d'ajouter une entrée (166) à l'ensemble de données de fichier de façon à associer le au moins un premier identifiant au au moins un enregistrement de dossier (165) à l'intérieur du système de gestion de contenus en réponse à la première instruction reçue, et
recevoir une deuxième instruction à partir d'un utilisateur d'associer au moins un deuxième identifiant de l'ensemble d'identifiants à au moins un élément de contenu (167) conservé en mémoire dans l'espace mémoire sur le dispositif informatique et d'ajouter une entrée (168) à l'ensemble de données de fichier de façon à associer le au moins un deuxième identifiant au fichier correspondant à l'élément de contenu respectif (167) à l'intérieur du système de gestion de contenus en réponse à la deuxième instruction reçue, où l'ordinateur est agencé sous le contrôle d'un logiciel de façon à créer l'interface utilisateur par
l'affectation du fichier correspondant à l'élément de contenu respectif au au moins un dossier dans l'interface utilisateur en fonction d'une comparaison entre le au moins un premier identifiant associé (166) à l'enregistrement de dossier respectif (165) auquel le au moins un dossier correspond et le au moins un deuxième identifiant associé (168) à l'élément de contenu respectif (167), de sorte que le fichier apparaisse dans l'interface utilisateur dans un dossier déterminé par le au moins un premier identifiant et le au moins un deuxième identifiant.

2. Le système de gestion de contenus selon la Revendication 1, où l'ordinateur est agencé sous le contrôle d'un logiciel de façon à :
produire en sortie un signal à partir du système de gestion de contenus, le signal produit en sortie étant agencé de façon à amener l'affichage d'au moins une partie de l'interface utilisateur (405) sur un dispositif d'affichage en vue d'un visionnement par un utilisateur.

3. Le système de gestion de contenus selon l'une quelconque des Revendications précédentes, où l'ordinateur est agencé sous le contrôle d'un logiciel de façon à : recevoir une instruction à l'intérieur du système de gestion de contenus de copier le fichier correspondant à un élément de contenu à l'intérieur d'un dossier existant dans l'interface utilisateur vers un autre dossier existant à l'intérieur de l'interface utilisateur,
identifier le dossier de l'interface utilisateur vers lequel le fichier correspondant à l'élément de contenu doit être copié,
identifier l'identifiant ou les identifiants associés (166) au dossier identifié, et associer l'identifiant ou les identifiants identifiés (168) à l'étiquette d'élément de contenu unique pour l'élément de contenu de façon à associer de manière additionnelle l'identifiant ou les identifiants identifiés à l'élément de contenu de sorte que le fichier correspondant à l'élément de contenu soit amené à apparaître de manière additionnelle dans le dossier identifié dans l'interface utilisateur (405).

4. Le système de gestion de contenus selon l'une quelconque des Revendications précédentes, où l'ordinateur est agencé sous le contrôle d'un logiciel de façon à : recevoir à l'intérieur du système de gestion de contenus une instruction de déplacer le fichier correspondant à un élément de contenu (167) dans l'interface utilisateur d'un cinquième dossier vers un sixième dossier,
identifier l'identifiant ou les identifiants associés au cinquième dossier, identifier l'identifiant ou les identifiants associés au sixième dossier, supprimer l'association entre l'identifiant ou les identifiants identifiés associés (168) au cinquième dossier et l'élément de contenu, et
associer l'identifiant ou les identifiants identifiés associés au sixième dossier à l'élément de contenu (167) de sorte que le fichier correspondant à l'élément de contenu soit amené à apparaître dans le sixième dossier dans l'interface utilisateur au lieu d'apparaître dans le cinquième dossier.

5. Le système de gestion de contenus selon l'une quelconque des Revendications précédentes, où l'ordinateur est agencé sous le contrôle d'un logiciel de façon à :
recevoir une instruction d'associer une pluralité d'identifiants (168) à l'élément de contenu (167), et associer la pluralité d'identifiants à l'élément de contenu, et où au moins un sous-ensemble de la pluralité d'identifiants est associé à un troisième dossier de l'interface utilisateur et au moins un autre sous-ensemble de la pluralité d'identifiants est associé à un quatrième dossier de l'interface utilisateur, le quatrième dossier étant un sous-dossier du troisième dossier, affecter à l'intérieur du système de gestion de contenus le fichier correspondant à l'élément de contenu au quatrième dossier et empêcher le fichier correspondant à l'élément de contenu d'être affecté au troisième dossier.

6. Le système de gestion de contenus selon l'une quelconque des Revendications précédentes, où l'identifiant comprend une première partie d'identifiant et une deuxième partie d'identifiant, la première partie d'identifiant comprenant le nom d'une variable et la deuxième partie d'identifiant comprenant la valeur de la variable.

7. Le système de gestion de contenus selon l'une quelconque des Revendications précédentes, où l'identifiant est modifiable par un programme informatique ou par un utilisateur, et l'ordinateur (100) est agencé sous le contrôle d'un logiciel, où l'identifiant associé (168) à l'élément de contenu (167) est modifié, de façon à modifier l'interface utilisateur de façon à montrer le fichier correspondant à l'élément de contenu à l'intérieur d'un autre dossier et/ou un dossier différent en fonction de l'identifiant modifié.

8. Le système de gestion de contenus selon l'une quelconque des Revendications précédentes, où l'ordinateur est agencé sous le contrôle d'un logiciel de façon à :
créer à l'intérieur du système de gestion de contenus une étiquette d'enregistrement de dossier unique pour chaque enregistrement de dossier, conserver en mémoire l'étiquette d'enregistrement de dossier en tant que partie de l'enregistrement de dossier (165) et associer (166) au moins un identifiant de l'ensemble d'identifiants à l'étiquette d'enregistrement de dossier de façon à associer le au moins un identifiant de l'ensemble d'identifiants à l'enregistrement de dossier respectif, et/ou
créer à l'intérieur du système de gestion de contenus une étiquette d'élément de contenu unique pour chaque élément de contenu (167) et associer (168) au moins un identifiant de l'ensemble d'identifiants à l'étiquette d'élément de contenu de façon à associer le au moins un identifiant de l'ensemble d'identifiants à l'élément de contenu respectif, et
créer, dans le cadre de la conservation en mémoire du au moins un élément de contenu à l'intérieur de l'espace mémoire sur le dispositif informatique, au moins un répertoire à l'intérieur de l'espace mémoire, le chemin d'accès aux fichiers dudit répertoire dépendant de l'étiquette d'élément de contenu de l'élément de contenu respectif, et conserver en mémoire l'élément de contenu respectif dans le répertoire respectif.

9. Le système de gestion de contenus selon l'une quelconque des Revendications précédentes, où l'ordinateur est agencé sous le contrôle d'un logiciel de façon à :
recevoir une instruction à l'intérieur du système de gestion de contenus d'affecter un élément de contenu additionnel à un dossier existant dans l'interface utilisateur ou créer l'élément de contenu additionnel à affecter à un dossier existant dans l'interface utilisateur,
créer à l'intérieur du système de gestion de contenus une étiquette d'élément de contenu unique pour l'élément de contenu additionnel (167),
ajouter l'élément de contenu additionnel et conserver en mémoire l'élément de contenu additionnel dans l'espace mémoire,
identifier le dossier de l'interface utilisateur auquel l'élément de contenu additionnel doit être affecté,
identifier l'identifiant ou les identifiants associés au dossier identifié (166), et
associer (168) l'identifiant ou les identifiants identifiés à l'étiquette d'élément de contenu unique pour l'élément de contenu additionnel de façon à associer l'identifiant ou les identifiants identifiés à l'élément de contenu additionnel (167) de sorte que le fichier correspondant à l'élément de contenu additionnel soit amené à apparaître dans le dossier identifié dans l'interface utilisateur.

10. Le système de gestion de contenus selon l'une quelconque des Revendications précédentes, où l'ordinateur est agencé sous le contrôle d'un logiciel de façon à :
recevoir une instruction à l'intérieur du système de gestion de contenus de créer un sous-dossier à l'intérieur d'un dossier de l'interface utilisateur,
créer un nouvel enregistrement de dossier (165) à l'intérieur du système de gestion de contenus correspondant au sous-dossier,
identifier le dossier de l'interface utilisateur à l'intérieur duquel le sous-dossier est créé,
identifier l'identifiant ou les identifiants associés (166) au dossier identifié,
associer l'identifiant ou les identifiants identifiés au nouvel enregistrement de dossier, et
associer au moins un identifiant additionnel au nouvel enregistrement de dossier.

11. Le système de gestion de contenus selon l'une quelconque des Revendications précédentes, où l'ordinateur est agencé sous le contrôle d'un logiciel de façon à :
vérifier à l'intérieur du système de gestion de contenus qu'une instruction reçue satisfait au moins un critère d'autorisation, et exécuter les actions demandées en tant que partie de l'instruction reçue uniquement si l'instruction reçue satisfait le critère d'autorisation, éventuellement où l'ordinateur est agencé sous le contrôle d'un logiciel de façon à recevoir en tant que partie de l'instruction reçue une valeur d'autorisation, ladite valeur d'autorisation dépendant de l'origine de l'instruction reçue, comparer la valeur d'autorisation à un enregistrement d'autorisation conservé en mémoire à l'intérieur du système de gestion de contenus de façon à déterminer si l'instruction reçue satisfait le critère d'autorisation.

12. Un dispositif informatique comprenant le système de gestion de contenus selon l'une quelconque des Revendications précédentes.

13. Un programme informatique contenant des parties de code qui, lorsqu'elles sont chargées et exécutées sur un ordinateur, amènent l'ordinateur à configurer un système de gestion de contenus selon l'une quelconque des Revendications 1 à 11.

14. Un procédé d'actionnement d'un système de gestion de contenus destiné à des éléments de contenu conservés en mémoire dans un espace mémoire (160) sur un dispositif informatique (100), le système de gestion de contenus permettant une interaction d'utilisateur avec les éléments de contenu indépendamment de la structure de l'espace mémoire, le procédé comprenant les opérations suivantes :
la création d'une interface utilisateur (405) à des fins d'affichage de façon à permettre à un utilisateur de visionner et d'interagir avec le au moins un élément de contenu, l'interface utilisateur comprenant une structure hiérarchique de dossiers et de fichiers à l'intérieur de ces dossiers, chaque fichier correspondant à un élément de contenu dans l'espace mémoire,
la détention d'un ensemble de données de fichier (164) relatives aux dossiers et fichiers et des identifiants associés à ceux-ci pour une utilisation dans la détermination de la manière dont les dossiers et fichiers sont affichés dans l'interface utilisateur, la structure de l'interface étant indépendante de la structure de l'espace mémoire,
la réception d'une première instruction à partir d'un utilisateur destinée à associer au moins un identifiant d'un ensemble d'identifiants à au moins un enregistrement de dossier (165) et l'ajout d'une entrée (166) à l'ensemble de données de fichier de façon à associer le au moins un identifiant de l'ensemble d'identifiants au au moins un enregistrement de dossier à l'intérieur du système de gestion de contenus en réponse à la première instruction reçue, et
la réception d'une deuxième instruction à partir d'un utilisateur destinée à associer au moins un identifiant de l'ensemble d'identifiants à au moins un élément de contenu (167) conservé en mémoire dans l'espace mémoire sur le dispositif informatique et l'ajout d'une entrée (168) à l'ensemble de données de fichier de façon à associer le au moins un identifiant de l'ensemble d'identifiants au fichier correspondant à l'élément de contenu respectif (167) à l'intérieur du système de gestion de contenus en réponse à la deuxième instruction reçue, et
l'affectation du fichier correspondant à l'élément de contenu respectif (167) au au moins un dossier dans l'interface utilisateur en fonction d'une comparaison entre l'identifiant ou les identifiants associés (168) avec l'élément de contenu respectif et l'identifiant ou les identifiants associés (166) à l'enregistrement de dossier respectif (165) auquel le au moins un dossier correspond, de sorte que le fichier apparaisse dans l'interface utilisateur dans un dossier déterminé par le au moins un premier identifiant et le au moins un deuxième identifiant.

15. Un procédé selon la Revendication 14, comprenant les opérations suivantes :
la réception d'une instruction d'associer une pluralité d'identifiants (168) à l'élément de contenu (167), et l'association de la pluralité d'identifiants à l'élément de contenu, et où au moins un sous-ensemble de la pluralité d'identifiants est associé à un troisième dossier de l'interface utilisateur et au moins un autre sous-ensemble de la pluralité d'identifiants est associé à un quatrième dossier de l'interface utilisateur, le quatrième dossier étant un sous-dossier du troisième dossier, l'affectation à l'intérieur du système de gestion de contenus du fichier correspondant à l'élément de contenu au quatrième dossier et l'empêchement du fichier correspondant à l'élément de contenu d'être affecté au troisième dossier.

16. Un procédé selon l'une quelconque des Revendications 14 à 15, comprenant les opérations suivantes :
la réception à l'intérieur du système de gestion de contenus d'une instruction de déplacer le fichier correspondant à un élément de contenu dans l'interface utilisateur d'un cinquième dossier vers un sixième dossier,
l'identification de l'identifiant ou des identifiants associés au cinquième dossier,
l'identification de l'identifiant ou des identifiants associés au sixième dossier,
la suppression de l'association entre l'identifiant ou les identifiants identifiés associés (168) au cinquième dossier et l'élément de contenu, et
l'association de l'identifiant ou des identifiants identifiés associés au sixième dossier à l'élément de contenu (167) de sorte que le fichier correspondant à l'élément de contenu soit amené à apparaître dans le sixième dossier dans l'interface utilisateur au lieu d'apparaître dans le cinquième dossier.
